# EUROPEAN PATENT SPECIFICATION

(11) **EP 3 930 899 B1**
(45) Date of publication and mention of the grant of the patent: **21.02.2024**
(21) Application number: 20713962.7
(22) Date of filing: 26.02.2020
(51) Int. Cl.: B01L 3/00, G01N 15/00, G01N 15/14, G01N 15/10

(54) **MICROFLUIDIC METHOD AND SYSTEM FOR THE ISOLATION OF PARTICLES**
MIKROFLUIDISCHES VERFAHREN UND SYSTEM ZUR ISOLIERUNG VON PARTIKELN
PROCÉDÉ ET SYSTÈME MICROFLUIDIQUES POUR L'ISOLATION DE PARTICULES

(30) Priority: 26.02.2019 IT 201900002777
(43) Date of publication of application: 05.01.2022
(73) Proprietor: Menarini Silicon Biosystems S.p.A., 40013 Castel Maggiore (BO) (IT)
(72) Inventor: MEDORO, Gianni, 40033 Casalecchio di Reno (BO) (IT)
(74) Representative: Studio Torta S.p.A.
(86) International application number: PCT/IB2020/051647
(87) International publication number: WO 2020/174422

(56) References cited:
- EP-A1- 2 731 723
- EP-B1- 2 731 723
- WO-A1-2015/061497
- WO-A1-2017/050649
- CN-A- 109 142 717
- US-A1- 2008 302 732
- US-A1- 2016 016 180

## Description

### CROSS-REFERENCE TO RELATED APPLICATIONS

This patent application claims priority from Italian patent application no. 102019000002777 filed on 26/02/2019.

### TECHNICAL FIELD

The present invention relates to a microfluidic method and system for the isolation of particles.

### BACKGROUND OF THE INVENTION

Different methodologies are known to obtain the isolation of a given type of particle relative to others.

However, to date no single device has been able to rapidly isolate, with high levels of purity, samples containing rare cells (for example circulating tumour cells) dispersed in large quantities of different types of particles.

The international patent application WO2012037030 discloses a device that can be used to obtain an enrichment of circulating tumour cells (CTC).

Nevertheless, this device (see example 1) allows a sample still containing non-negligible quantities of erythrocytes and lymphocytes to be obtained and does not allow single cells with a purity of 100% to be obtained.

CN109142717A discloses that biological activity in holding pens in a micro-fluidic device can be assayed by placing in the holding pens capture objects that bind a particular material of interest produced by the biological activity. The biological material of interest that binds to each capture object can then be assessed, either in the micro-fluidic device or after exporting the capture object from the micro-fluidic device. WO2015061497 discloses a microfluidic device comprising at least one swept region that is fluidically connected to unswept regions. The fluidic connections between the swept region and the unswept regions can enable diffusion but substantially no flow of media between the swept region and the unswept regions. The capability of biological micro-objects to produce an analyte of interest can be assayed in such a microfluidic device. Biological micro-objects in sample material loaded into a microfluidic device can be selected for particular characteristics and disposed into unswept regions.

EP2731723A1 discloses methods, microfluidic devices, and instruments for magnetic separation of particles from a fluid are described. Examples include microfluidic devices having a removable portion. Examples include microfluidic devices having one or more regions of reduced fluid velocity. Examples further including instruments having pneumatic interfaces. Examples further includes instruments having controllable magnets, imaging components, or combinations thereof.

The object of the present invention is to provide a microfluidic method and system for the isolation of particles, which make it possible to overcome, at least partially, the problems of the prior art and are, at the same time, easy and inexpensive to produce.

### SUMMARY

According to the present invention a microfluidic method and system are provided as defined in the following independent claims and, preferably, in any one of the claims depending directly or indirectly on the independent claims.

Unless explicitly specified to the contrary, in the present text the following terms have the meaning indicated below.

Equivalent diameter of a section is meant as the diameter of a circle having the same area as the section.

Microfluidic system is meant as a system comprising a microfluidic circuit in turn provided with at least one microfluidic channel and/or at least one microfluidic chamber. Advantageously but not necessarily, the microfluidic system comprises at least one pump (more in particular, a plurality of pumps), at least one valve (more in particular, a plurality of valves) and possibly at least one gasket (more in particular, a plurality of gaskets).

In particular, microfluidic channel is meant as a channel having a section with equivalent diameter below 0.5 mm. In other words, a microfluidic channel has at least one segment with section of equivalent diameter below 0.5 mm.

In particular, the microfluidic chamber has a height below 0.5 mm. More in particular, the microfluidic chamber has a width and a length greater than the height (more precisely at least five times the height).

In the present text, particle is meant as a corpuscle having the larger dimension below 500 µm (advantageously, below 150 µm, in particular, up to 10 µm). According to some non-limiting examples, the particles are chosen from: cells, cellular debris (in particular, cellular fragments), cellular aggregates (such as small clusters of cells deriving from stem cells such as neurospheres or mammospheres) bacteria, lipospheres, microspheres (polystyrene and/or magnetic), nanospheres (e.g. nanospheres up to 100 nm) complexes formed of microspheres bound to cells (and a combination thereof).

Advantageously, the particles are cells.

According to some non-limiting embodiments, the particles (advantageously cells and/or cellular debris) have the larger dimension below 60 µm.

According to some specific non-limiting embodiments, the particles are chosen in the group consisting of: tumour cells, white blood cells (WBC), stromal cells, sperm, circulating tumour cells (CTC), spores, foetal cells, microspheres (microbeads), liposomes, exosomes, epithelial cells, erythroblasts, trophoblasts, erythrocytes (and a combination thereof).

The sizes of the particles can be measured in standard mode with microscopes with a graduated scale or normal microscopes used with slides (on which the particles are deposited) with a graduated scale.

In the present text, particle size is meant as the length, width and depth of the particle.

The expression "substantially selectively" is used to identify a movement (or other analogous terms indicating a movement) of particles relative to other particles (which typically do not move). In particular, the particles that are moved and/or separated are particles the vast majority of which are of one or more given types. Advantageously but not necessarily, a substantially selective movement (or other similar terms indicating a movement and/or a separation) moves particles with at least 90% (advantageously 95%) of particles of the given type or types.

In the present text, the expressions "downstream" and "upstream" are to be interpreted with reference to the direction of the fluid flow and/or of the movement of the particles (from the inlet to the outlet of the microfluidic system).

### BRIEF DESCRIPTION OF THE FIGURES

The invention is described hereunder with reference to the accompanying drawings, which illustrate some non-limiting examples of embodiment thereof, wherein:
- Fig. 1 is a schematic plan view of a microfluidic system in accordance with the present invention;
- Fig. 2 is a schematic plan view of a further embodiment of a microfluidic system in accordance with the present invention during different operating steps;
- Figs. 3 to 6 are schematic plan views of the system of Fig. 2 in operating steps subsequent to one another;
- Fig. 7 schematically illustrates a part of the system of Fig. 2 in which some details have been omitted for clarity;
- Fig. 8 illustrates some details of Fig. 2 on an enlarged scale;
- Fig. 9 illustrates in a plan view and on an enlarged scale a detail of Fig. 2;
- Fig. 10 is a sectional view along the line IX-IX of the detail of Fig. 9;
- Figs. 11 to 16 illustrate different embodiments of a detail of the microfluidic system of Fig. 2;
- Fig. 17 is a top view of a part of a further embodiment of a microfluidic system in accordance with the present invention;
- Fig. 18 is a schematic plan view of a further embodiment of a microfluidic system in accordance with the present invention;
- Fig. 19 is a schematic plan view of a further embodiment of a microfluidic system in accordance with the present invention; and
- Fig. 20 is a schematic plan view of the microfluidic system of Fig. 2 in a different operating mode.

### DETAILED DESCRIPTION

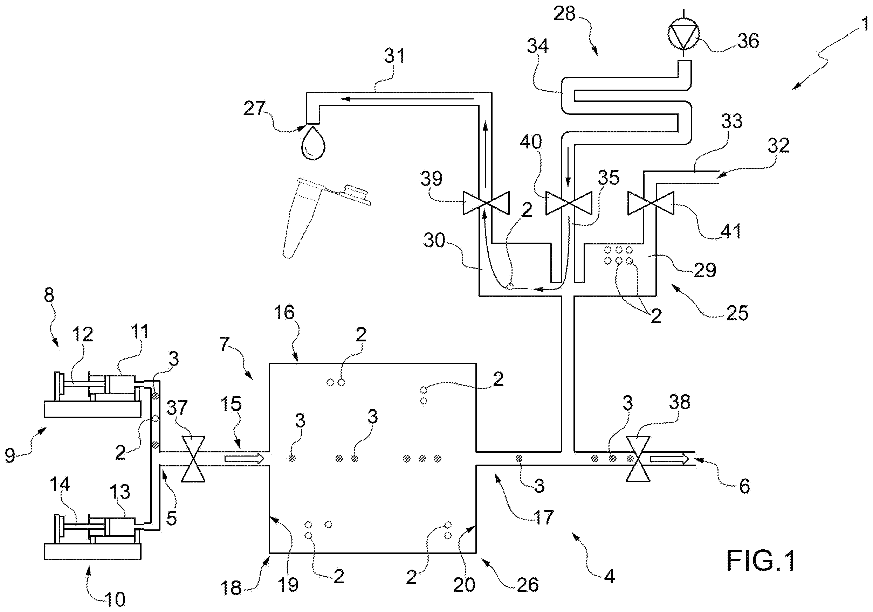

In Fig. 1, a microfluidic system for the isolation of at least one particle 2, more precisely for the isolation of particles 2 of a given type relative to other particles 3 of a different type, is indicated as a whole with 1.

In particular, the particles 3 are morphologically different from the particles 2.

For example, the particles 3 are different from the particles 2 in size and/or weight.

The microfluidic system 1 comprises a microfluidic circuit 4, which is, in turn, provided with: at least one inlet 5; at least one outlet 6; and at least one microfluidic channel 7, which (extends between the inlet 5 and the outlet 6 and) is designed to fluidically connect the inlet 5 and the first outlet 6. The system 1 further comprises a feeding assembly 8, which is designed to feed a sample along the channel 7.

The sample comprises at least the particle 2 (more precisely, a plurality of particles 2) and at least one particle 3 (more precisely, a plurality of particles 3).

In particular, the (each) particle 2 has a different size relative to the (each) particle 3. More precisely, the (each) particle 2 is of larger size than the (each) particle 3.

According to some specific non-limiting embodiments, the (each) particle 2 comprises (is) a circulating tumour cell; the (each) particle 3 is chosen in the group consisting of: erythrocytes, lymphocytes (and a combination thereof).

According to some non-limiting embodiments, the feeding assembly 8 comprises a feeding device 9 to feed the sample to the microfluidic circuit; and a washing device 10 to feed a washing fluid (in particular, comprising a buffer solution such as PBS - phosphate-buffered saline) through the channel 7 and towards (through) the outlet 6 (out of the microfluidic circuit).

In particular, the feeding device 9 comprises a reservoir 11 (designed to contain the sample) and an actuator 12, more precisely a pump (even more precisely, a syringe pump).

In particular, the washing device 10 comprises a reservoir 13 (designed to contain the washing solution) and an actuator 14, more precisely a pump (even more precisely, a syringe pump).

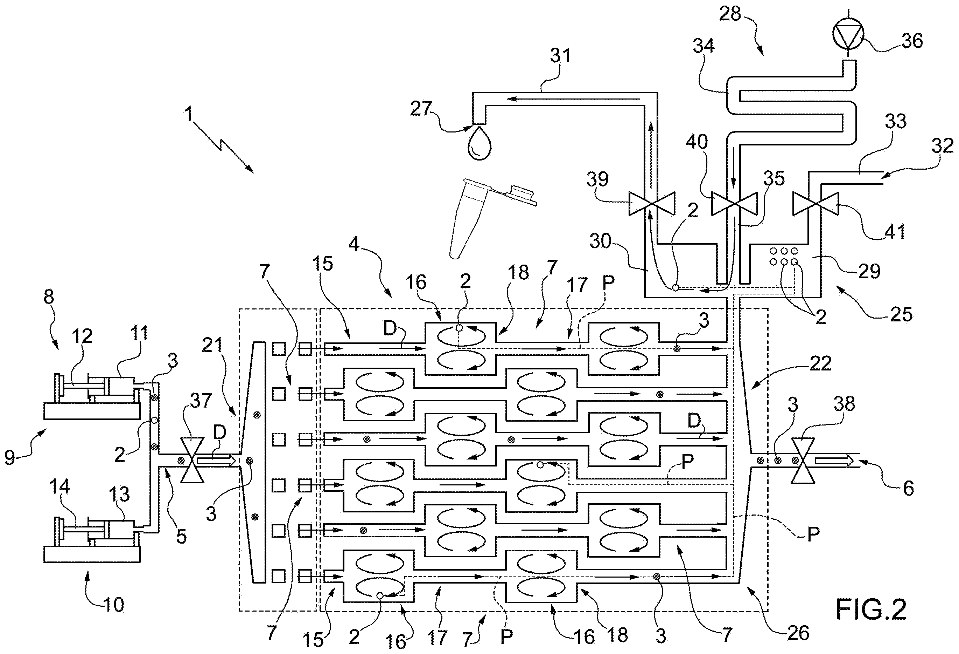

With particular reference to Fig. 2, advantageously but not necessarily, the system 1 (more precisely, the microfluidic circuit 4) comprises a plurality of microfluidic channels 7.

The (each) channel 7 comprises at least one (respective) segment 15, at least one (respective) segment 16, which is arranged downstream of the segment 15, and at least one segment 17, which is arranged downstream of the segment 16.

The system 1 (in particular, the channel 7) further comprises a trapping system, which (in particular, is arranged at the segment 16 and) is designed to trap the particle 2 in the microfluidic channel 7 at the second segment 16, letting the particle 3, which reaches at least the segment 17, pass through.

In other words, the trapping system is designed to (configured to) prevent the particle 2 from escaping (exiting) from the microfluidic channel 7 (in particular, from the second segment 16), in particular letting the particle 3 (which reaches at least the segment 17) pass through.

According to some non-limiting embodiments, the trapping system is chosen in the group consisting of: the second segment 16 shaped so as to generate, as a consequence of a fluid flow flowing through the microfluidic channel 7 itself, a vortex at the segment 16 designed to trap the first particle 2; a device designed to exert a dielectrophoretic force at the segment 16; a device designed to exert a magnetic force at the segment 16 (and a combination thereof).

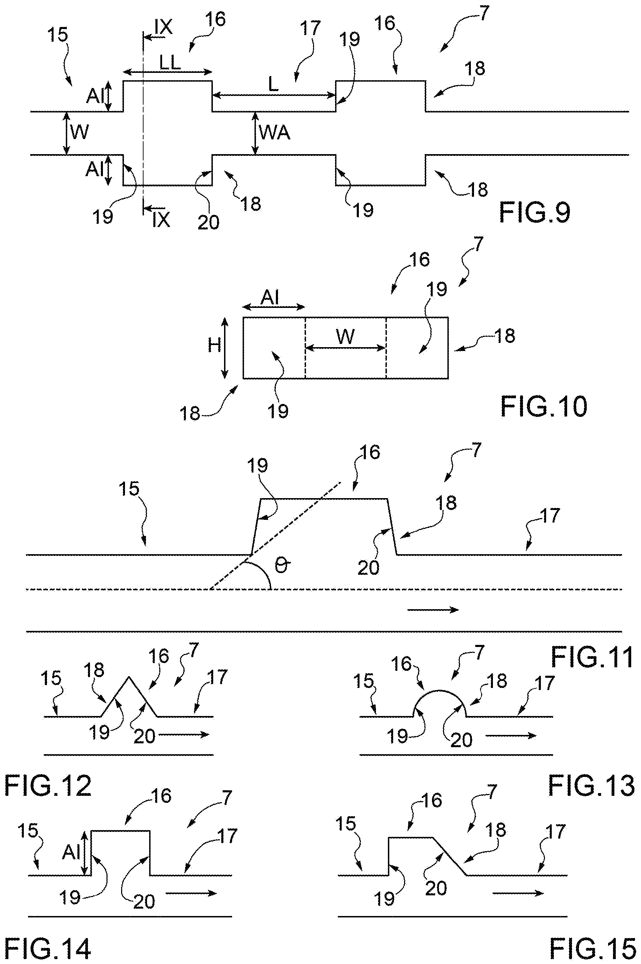

Advantageously but not necessarily, the (each) segment 15 has an inner cross-section; the (each) segment 16 has an inner cross-section with a sudden increase AI, in particular a sudden increase of the equivalent diameter of at least approximately 80 um (Figs. 9 and 14), relative to the inner cross-section of the segment 15. The (each) segment 17 has a smaller inner cross-section than the inner cross-section of the segment 16.

Advantageously but not necessarily, the (each) channel 7 comprises a plurality of segments 16 arranged in succession. More precisely, in these cases, one or more segments 17 can also perform the function of the segments 15 (being arranged both downstream and upstream of a segment 16).

In particular, the size increase AI ranges from approximately 80 um to approximately 800 um (more precisely, up to 400; even more precisely, up to 100 um). It should be noted that in Figs. 9 and 10 there is an increase AI on both sides of the channel 7.

Typically, the segments 15 and 17 have, each independently from the other, a respective width W and WA from 20 um to 200 um.

Advantageously but not necessarily, the segments (each segment) 15 and 17 have/has a length L greater than 20 um.

According to some preferred embodiments, the (each) expansion segment 16 has a length LL ranging from approximately 200 um to approximately 2 mm.

This allows positioning of the particles particularly inside the segment 15 to be improved.

Advantageously but not necessarily, the channel 7 has (in particular, the segments 15, 16 and 17 have) a height H ranging from 20 um to 500 um.

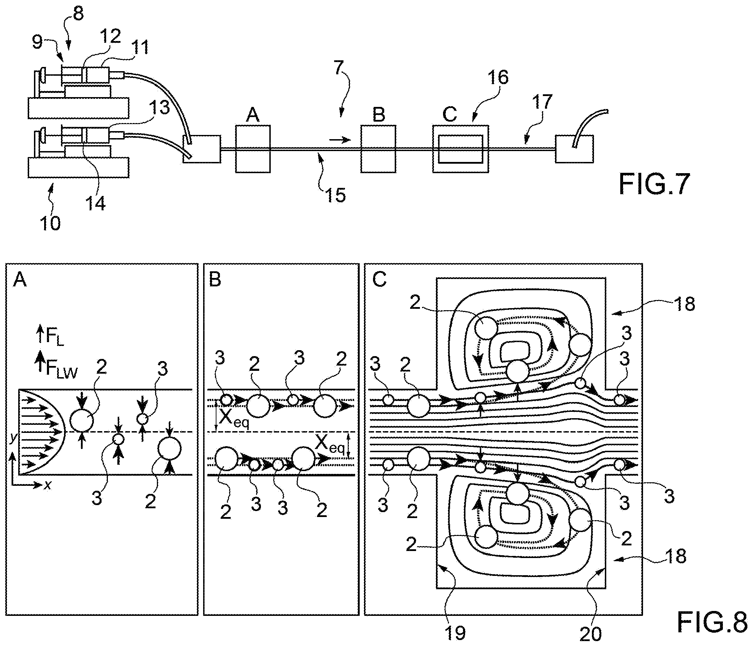

In this regard, it should be noted that two forces act on the particles 2 and 3 (view A of Fig. 8) while they are conveyed along the segment 15 so that each particle 2 and 3 reaches a respective equilibrium position X_{eq} (view B of Fig. 8), defined as the distance between each particle and the wall of the channel 7, in which the two forces offset each other.

The two forces are: a shear gradient lift force F_{L}, which acts on the particles 2 and 3 pushing them towards the walls of the channel 7 and a wall effect lift force F_{LW} that moves the particles 2 and 3 away from the walls of the channel 7.

At least one vortex is created (in the case illustrated in Fig. 8, view C, two vortices) in the expansion segment 16 and the particles 2 of larger sizes undergo a greater force F_{L} (the force F_{L} is generally proportional to the cubed diameter of the particles) and are trapped by the vortex, while the particles 3 of smaller sizes pass more easily through the segment 16 and reach the segment 17.

Advantageously but not necessarily, the segments 15, 16 and 17 have respective cross-sections substantially having the shape of a parallelogram (additionally or alternatively the shape of a quadrilateral - Fig. 10).

The construction details, the operation and the different embodiments of the (of each) channel 7 (and of the microfluidic circuit 4) are described in more depth in the international patent application WO2012037030.

Advantageously, the system 1 also comprises a control unit (of a per se known type and not illustrated) designed to adjust the operation of the washing device 10 (more precisely, of the actuator 14) and of the feeding device 9 (more precisely, of the actuator 12). In particular, in use, the control unit can ensure that the flow of fluid flowing along the (each) channel 7 is kept at (around) a desired value (to obtain the aforesaid vortex/vortices) operating the washing device 10 (more precisely, the actuator 14) at a greater extent as the feeding device gradually slows down (having exhausted the sample to be fed to the microfluidic circuit 4).

As better illustrated in Figs. 11-17, the channel 7 (more precisely, the expansion segment/segments 16) can have different shapes.

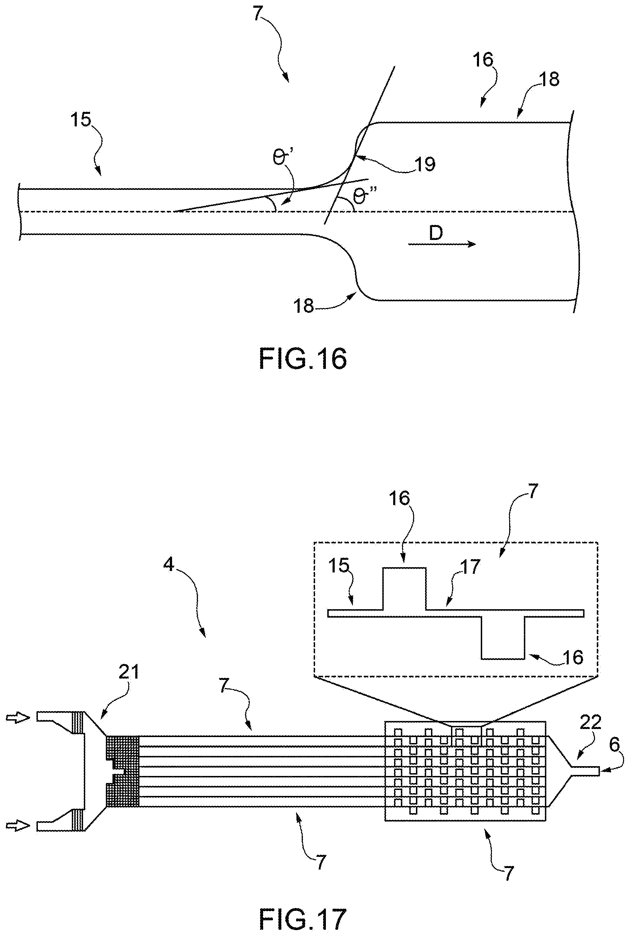

According to some non-limiting embodiments, the segment 16 widens only on one side. In these cases, advantageously but not necessarily, the subsequent segments 16 are arranged alternately on opposite sides (relative to the segments 15 and 17 - Fig. 17). This allows the trapping capacity of the particles 2 to be increased. Moreover, in this way, the segments 16 of adjacent channels 7 can be mutually staggered and the channels 7 can be arranged at a limited distance from one another reducing the overall dimensions.

According to some embodiments, the segment 16 comprises a widened area 18, which projects from the main extension of the channel 7, with a shape chosen in the group consisting of: substantially parallelepiped quadrilateral (Figs. 1-9, 14 and 17 - in particular, substantially rectangular), substantially trapezoidal (Figs. 11 and 15), substantially triangular (Fig. 12), substantially semi-circular (Fig. 13) (and a combination thereof). The embodiments of Figs. 1-8 and 16 have two widened areas 18.

Advantageously but not necessarily, the segment 16 (more precisely, the widened area 18) is delimited by at least one rear surface 19 arranged at the end of the segment 15 (and transverse to the microfluidic channel 7) and having an inclination of at least 45° (in particular, is substantially perpendicular) relative to a feeding direction D of the fluid along the channel 7 (in other words, the direction D of motion of the particles 2 and 3 along the segment 15). In particular, the direction D is also the direction of longitudinal extension of the channel 7.

According to some non-limiting embodiments, the channel 7 has a front surface 20 arranged the beginning of the segment 17, delimiting the segment 16 (more precisely, delimiting the widened area 18) (and transverse to the microfluidic channel 7) and having an inclination relative to the direction D. For example, the surface 20 can be inclined only slightly relative to the direction D allowing a gradual return to the width of the segment 15. Alternatively, the surface 20 is absent; in this case, the segment 17 has a width greater than the segment 15.

According to the embodiment illustrated in Fig. 11, the surface 19 has an inclination (relative to the direction of feed of the fluid) just below 90° (the angle θ illustrated in Fig. is 45° and allows comparison).

According to some non-limiting embodiments (such as the one illustrated in Fig. 16), the surface 19 is curved.

In the case of Fig. 16, the surface 19 gradually begins to diverge from the direction D. In this case, various tangents taken in different points of the surface 19 have angles differing even significantly from one another. For example, at the initial area of the surface 19 the tangent has a relatively small angle θ' and below 45°. However, moving towards the end of the surface 19, the angle θ" is wide and greater than 45°.

In the cases in which (as for the variant of Fig. 16) the surface 19 is curved or discontinuous, the inclination of the rear surface 19 is considered a mean angle obtained from the mean of the angles relative to the direction D along the entire length of the surface 19.

According to some non-limiting embodiments (Figs. 2-6), the microfluidic circuit 4 comprises a connection 21 (manifold) arranged between the feeding assembly 8 and the channel/s 7. The connection 21 (manifold) allows the sample and/or the washing fluid to be carried to all the channels 7. More in particular, the connection 21 is arranged at the initial end/s of the channel/s 7.

In particular, the microfluidic circuit 4 also comprises a connection 22, which is arranged downstream of the channels 7, more precisely between the channels 7 and the outlet 6, to fluidically connect all the channels 7 with the outlet 6. In use, the connection 22 allows the fluid passing through the channels 7 to exit from the microfluidic circuit 4 through the outlet 6. More in particular, the connection 22 is arranged at the terminal end/s of the channel/s 7.

It should be noted that the connection 22 can also be considered part of or to form the segment/s 17.

The system 1 comprises a collection area 25 fluidically connected to the microfluidic channel 7 and arranged downstream of the microfluidic channel 7.

The system 1 further comprises a movement device 26 designed to directly exert a (selective) force on the (on each) particle 2 of a given type (in particular, without the force being exerted on the fluid that transfers the movement to the particle 2) so as to move the (each) particle 2 itself substantially selectively (in particular, relative to the particle/s 3) along at least one part of a given path P (in particular, from the segment 16 - i.e., starting from the segment 16; more precisely, out of the segment 16) downstream of the segment 16 (more precisely, in an area downstream of the segment 16) from the channel 7 to the collection area 25.

In particular, in other words, the movement device 26 is designed to directly exert a (selective) force on the (on each) particle 2 of given type so as to move the (each) particle 2 itself from the segment 16 (i.e., from the inside of the segment 16) along at least one part of the given path P.

In particular, the path P extends (inside the microfluidic system 1) inside (more precisely, along) part (at least part) of the microfluidic circuit 4, in particular from the segment 16 (i.e., from inside the segment 16) downstream of the segment 16 (more in particular, towards the further outlet 27). More precisely but not necessarily, the path P extends from the segment 16 (i.e., from inside the segment 16) to the collection area 25.

Advantageously but not necessarily, the system 1 comprises a further outlet 27 of the microfluidic circuit 4 and a conveying assembly 28, which is designed to convey the (each) particle 2 from the collection area 25 through the outlet 27 out of the microfluidic circuit 4.

According to some non-limiting embodiments, the collection area 25 is designed to place the channel/s 3 and the outlet 27 in fluidic communication.

Advantageously but not necessarily, the collection area 25 comprises a waiting area 29 and a recovery area 30 fluidically connected to each other (and to the channel 7). The area 30 is connected, in particular directly (i.e., without the interposition of other elements), fluidically to the outlet 27. In particular, the area 30 places the area 29 in fluidic communication with the outlet 27 (more precisely, is arranged between the outlet 27 and the area 29).

In further detail, the microfluidic circuit 4 comprises an outlet duct 31 interposed between the collection area 25, in particular the area 30, and the outlet 27.

According to specific non-limiting embodiments (such as those illustrated in Figs. 2-6), the areas 29 and 30 are a waiting chamber and a recovery chamber, respectively, and are connected to the channel 7 (and to each other) by means of at least one connection channel having a cross-section smaller than a cross-section of at least one part of the waiting chamber (and/or of the recovery chamber).

According to some non-limiting embodiments, the microfluidic circuit 4 comprises a further outlet 32 arranged at the waiting area 29. More precisely, the area 29 fluidically connects the area 30 and the outlet 32 (is arranged between the outlet 32 and the area 30, and/or the channel 7). In particular, the microfluidic circuit also comprises a duct 33, which is arranged between and fluidically connects the area 29 to the outlet 32.

In particular, the system 1 (more precisely, the conveying assembly 28) further comprises a reservoir 34 of washing liquid fluidically connected to the collection area 25 and designed to contain (and receive) a washing liquid, in particular a buffer.

More in detail, the reservoir 34 is connected to a feeding area 35 of the collection area 25 interposed between the waiting area 29 and the recovery area 30. The reservoir 34 comprises, in particular is, a feeding duct.

According to some non-limiting embodiments, the system 1 (in particular, the conveying assembly 28) comprises pressure means 36 (more precisely, a pump and/or a tank of pressurized gas) designed to direct the washing liquid from the reservoir 34 to the collection area 25 (in particular, through the area 35).

According to some non-limiting embodiments, the system 1 (more precisely, the movement device 26) comprises a detection device (not illustrated and known per se) to capture images of at least part of the microfluidic circuit 4, in particular of at least (part of) the channel 7, more in particular of at least (part of) the segment 16.

Additionally or alternatively, the detection device is designed to capture images of at least (part of) the given path P, in particular of (at least part of) the segment 16, and of (at least part of) the collection area 25.

Advantageously but not necessarily, the detection device comprises an apparatus provided with an optical microscope designed to obtain a fluorescence image and/or bright field image to detect the type and the positioning of the single particles 2 and/or 3 present in at least part of the microfluidic circuit 4. In particular, the apparatus provided with microscope is configured to stimulate selective fluorescence markers with which the particles 2 and/or 3 are marked and to detect the position of the marked particles 2 and/or 3 in the microfluidic circuit based on the fluorescence signal received.

According to some preferred but non-limiting embodiments, the detection device is able to distinguish (in particular based on one or more morphological and/or fluorescence features; for example colour and/or shape) between the particles 2 and 3 even when the particles 2 and 3 have the same size.

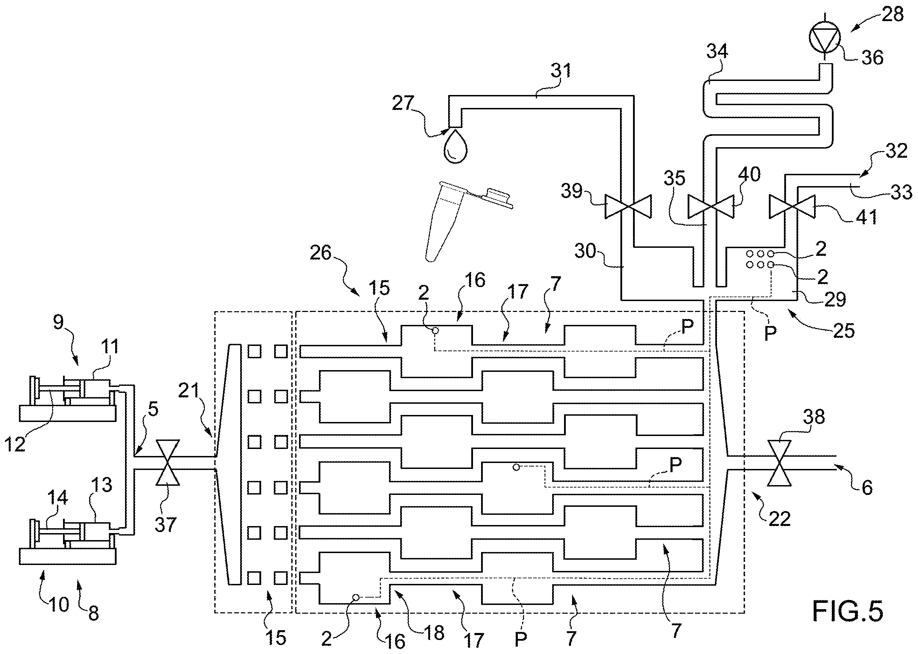

In particular (Fig. 5), the movement device 26 is designed to (directly) exert a force on the particle/s 2 so as to move the particle/s 2 until reaching, selectively relative to the particle/s 3, the collection area 25 (in particular, the waiting area 29) .

In particular, the movement device 26 comprises a control device (not illustrated), which is designed to regulate the operation of the movement device 26 (more precisely, of actuators - e.g. electrodes - of the movement device 26) as a function of what is detected by the detection device.

Advantageously, but not necessarily, the control device is part of (or is connected to) the above-mentioned control unit of the system 1.

According to some non-limiting embodiments, the movement device 26 is designed to exert a selective force (relative to other particles 3 and/or 2) on the (each) particle 2 so as to move the (each) particle 2 itself to the collection area 25 (in particular, the waiting area 29).

Selective force on one or more particles is meant as a force that is exerted on this/these particle/s but not on one or more other particles.

Advantageously but not necessarily, the movement device 26 is designed to move (at least) the particle 2 independently relative to other particles 3.

In this way, a group of particles 2 can be created at (inside of) the collection area 25 (more precisely of the waiting area 29) .

Advantageously but not necessarily, the movement device 26 is designed to (directly) exert a force on one (each) particle 2 of the group di particles 2 arranged in the collection area 25 (in particular, in the waiting area 29) so as to move the particle 2 until selectively reaching (relative to other particle/s) the recovery area 30.

According to some non-limiting embodiments, the movement device 26 is designed to exert a selective force (relative to other particles 3 and/or 2) on the (each) particle 2 so as to move the (each) particle 2 itself from the waiting area 29 to the recovery area 30.

Advantageously but not necessarily, the movement device 26 comprises a particle moving system chosen in the group consisting of: travelling waves, thermal flow, local fluid movements generated by electro thermal flow, local fluid movements generated by electro-hydrodynamic forces, dielectrophoresis, optical tweezers, opto-electronic tweezers, light-induced dielectrophoresis, magnetophoresis, acoustophoresis (and a combination thereof).

More in particular, the movement device 26 comprises a particle moving system chosen in the group consisting of: dielectrophoresis, optical tweezers, magnetophoresis, acoustophoresis (and a combination thereof).

According to specific non-limiting embodiments, the system 1 (more precisely, the movement device 26) comprises a dielectrophoresis unit (or system) such as the one described in at least one of the patent applications WO-A-0069565, WO-A-2007010367, WO-A-2007049120.

In particular, the movement device 26 comprises a part of the dielectrophoresis unit (or system). More in particular, the movement device 26 operates in accordance with the description of the patent applications published with the numbers WO2010/106434 and WO2012/085884).

Advantageously but not necessarily, the system 1 comprises a flow regulator 37 (valve), which is arranged upstream of the channel/s 7, more precisely between the feeding assembly 8 and the channel/s 7 (in particular, between the feeding assembly 8 and the connection 21).

Advantageously but not necessarily, the system 1 comprises a flow regulator 38 (valve), which is arranged downstream of the channel/s 7, more precisely between the channel/s 7 and the outlet 6 (in particular, between the connection 22 and the outlet 6) .

Advantageously but not necessarily, the system 1 comprises a flow regulator 39 (valve), which is arranged downstream of the recovery area 30, more precisely between the collection area 25 and the outlet 27 (in particular, between the recovery area 30 and the outlet 27; more in particular, along the outlet duct 31) .

Advantageously but not necessarily, the system 1 (in particular, the conveying assembly 28) comprises a flow regulator 40 (valve), which is arranged between the feed area 35 and the reservoir 34 (and between the feed area 35 and the pressure means 36).

Advantageously but not necessarily, the system 1 comprises a flow regulator 41 (valve), which is arranged downstream of the waiting area 29, more precisely between the collection area 25 and the outlet 32 (in particular, between the waiting area 29 and the outlet 32; more in particular, along the duct 33).

In particular, the flow regulators 37-41 are connected to the control unit (described above in greater detail), which is designed to regulate the operation of the flow regulators 37-41 themselves. More precisely, the control unit is designed to keep the flow regulators 37 and 38 open (and, preferably, the flow regulators 39, 40 and 41 closed), while the feeding assembly 8 is operated and the sample and/or the washing fluid is conveyed from the feeding assembly 8 itself towards the outlet 6.

Advantageously but not necessarily, the control unit is designed to keep the flow regulators 37-41 closed while the feeding device 26 takes the particle/s from the channel/s 7 to the collection area 25. In this way, the risk of perturbations of the fluid (liquid) present in the microfluidic circuit making the correct transfer of the particle/s 2 to the collection area more difficult is reduced.

Advantageously but not necessarily, the control unit is designed to keep the flow regulators 39, 40 and 41 (and, advantageously, also 37 and 38) closed while the movement device 26 moves the particle/s 2 individually from the waiting area 29 to the recovery area 30. In particular, when the particle 2 is in the area 30, the control unit (based on what was detected by the detection device in this regard) is designed to open the flow regulators 40 and 39 so as to let the washing liquid go from the reservoir 34 to the outlet 27 and consequently convey the particle/s 2 present in the recovery area 30 to the outlet 27 itself.

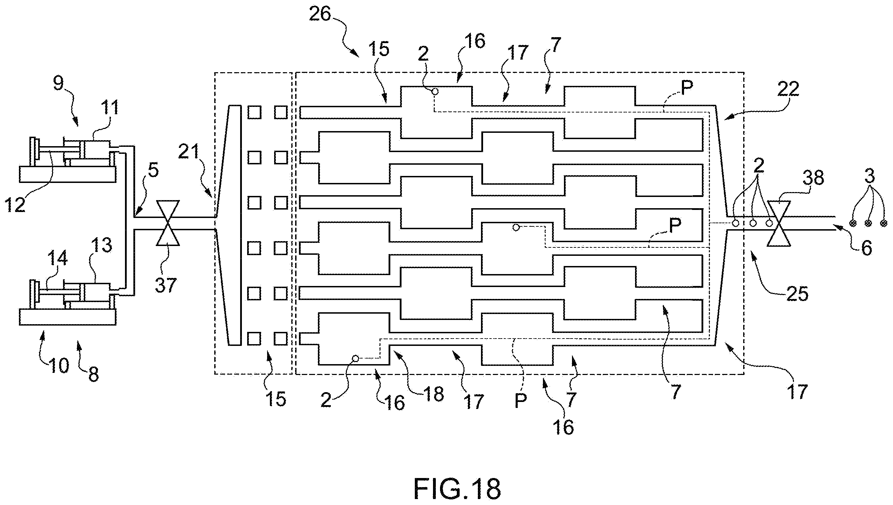

With particular reference to Fig. 18, according to some non-limiting embodiments, the collection area 25 corresponds to the connection 22. In particular, in these cases, the microfluidic circuit 4 has a single outlet 6 (through which, in use, both the particle/s 3 and the particle/s 2 are delivered from the microfluidic circuit 4). More in particular, in these cases, in use, the particle 2 is ejected from the microfluidic circuit 4 operating the washing device 10.

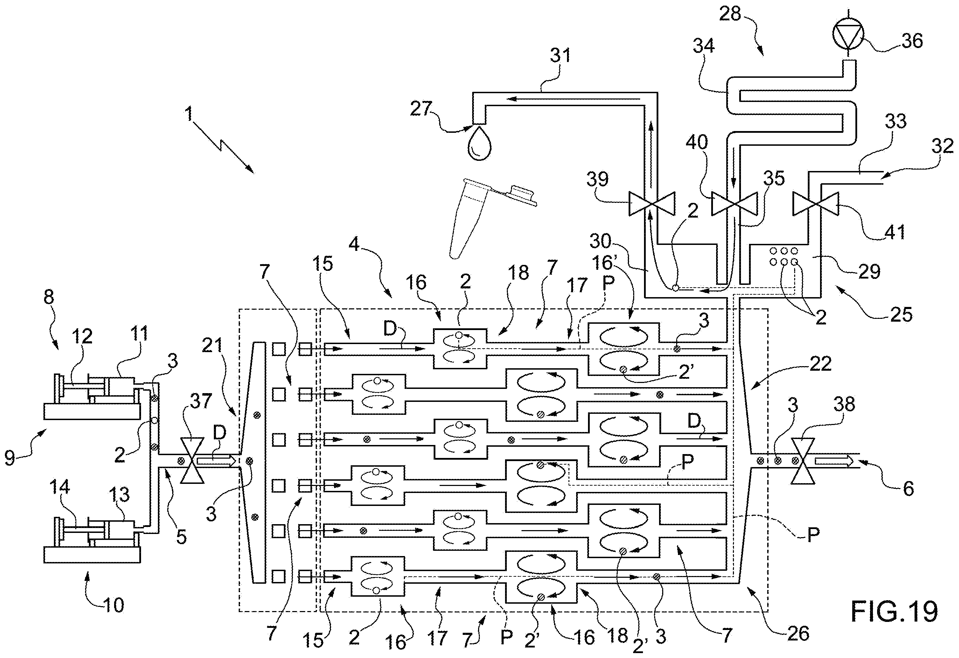

With particular reference to Fig. 19, according to some non-limiting operating modes, the sample comprises at least one further particle 2' (in particular, a plurality of further particles 2'). The particles 2' are different from the particles 2 (e.g. in size and/or weight) . More in particular, the particles 2' are morphologically different from the particles 2.

In particular, the particles 2' are different from the particles 3 (e.g. in size and/or weight) . More in particular, the particles 2' are morphologically different from the particles 3.

According to some non-limiting embodiments, the microfluidic channel 7 comprises at least one segment 16', which is arranged downstream of the segment 16. In these cases, the trapping system 1 is configured to trap the particle/s 2 in the segment 16, letting the particle/s 3 and the particle/s 2' pass through, and to trap the particle/s 2' in the fourth segment 16', letting the particle/s 3 go through.

In this way, it is possible to at least partially isolate several types of different particles (and hence, among other things, simplify the selection step described in more detail below).

According to some non-limiting embodiments, the trapping system is (additionally to what was indicated above in relation to the segment 16) chosen in the group consisting of: the segment 16' shaped so as to generate, as a consequence of a flow of fluid flowing through the microfluidic channel 7 itself, a vortex at the segment 16' designed to trap the particle 2'; a device designed to exert a dielectrophoretic force at the segment 16'; and a device designed to exert a magnetic force at the segment 16' (and a combination thereof).

In particular, the segment 16' is arranged along the segment 17.

Advantageously but not necessarily, the (each) segment 17 has (downstream of the segment 16 and upstream of the segment 16') an inner cross-section; the (each) segment 16' has an inner cross-section with a sudden increase AI, in particular of at least approximately 80 um, relative to the inner cross-section of the segment 17 (upstream of the segment 16'). The (each) segment 17 has, downstream of the segment 16' an inner cross-section smaller than the inner cross-section of the segment 16' .

For example, the trapping system comprises the segment 16' shaped so as to generate, as a consequence of a fluid flow flowing through the microfluidic channel 7 itself, a vortex arranged at the segment 16' and designed to trap the particle 2' .

Advantageously but not necessarily, the segment/s 16' has/have an inner cross-section different from the inner cross-section of the segment/s 16.

In accordance with an aspect of the present invention, it is is also provided a method of isolating at least one particle 2 of a given type by means of a microfluidic system 1, which is, in particular, as described above.

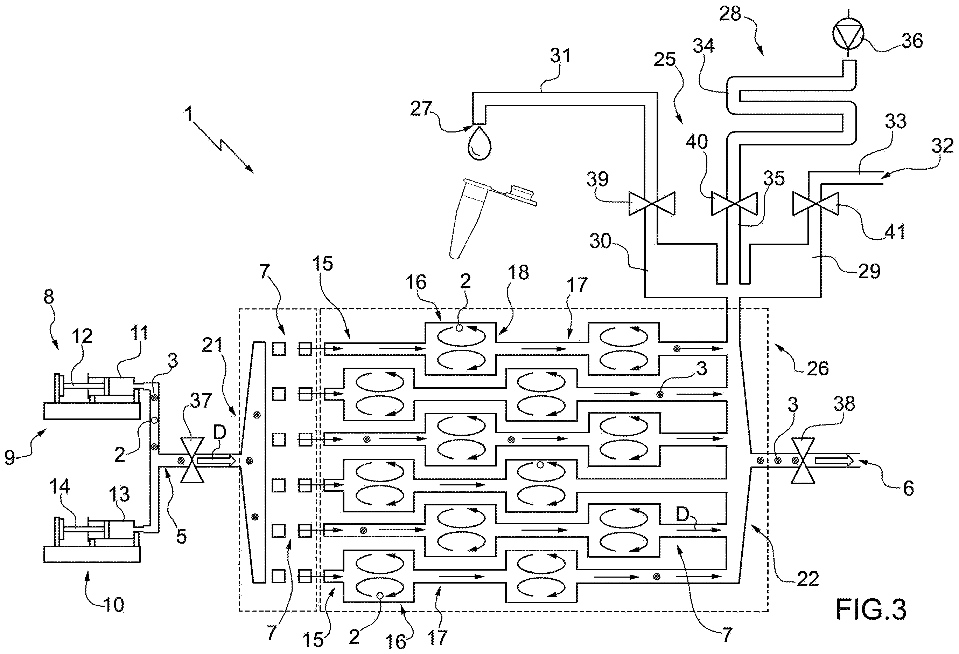

The method comprises a feeding step (Fig. 3), during which the feeding assembly 8 feeds a sample, comprising the particle/s 2 and at least one particle 3 of a different type to the particle 2, from the inlet 5 to the outlet 6 along (in particular, through) the microfluidic channel 7.

In particular, the sample also comprises (mainly consists of) a fluid (e.g. a buffer) in which the particles 2 and 3 are distributed (suspended).

According to some non-limiting embodiments, the fluid comprises (is) a substantially liquid base in which the particle/s 2 and the particle/s 3 are distributed.

The method further comprises a trapping step (which is substantially simultaneous to the feeding step), during which the particle/s 2 is/are trapped in the channel 7 (in particular, in the segment 16) and at least one particle 3 passes through the segment 16 and reaches at least the segment 17 (in particular, passes through the channel 7); and a selection step (Fig. 5), which is subsequent to the trapping step and during which the movement device 26 directly exerts a force (without the force being exerted on anything else - e.g. the fluid in which the particle - that transfers the movement to the particle 2 - is suspended) on the particle 2.

In other words, during the trapping step, the particle 2 is prevented from escaping (exiting) from the second segment 16, letting the particle 3, which reaches at least the segment 17, pass through.

Advantageously but not necessarily, the method comprises an adjustment step, during which the temperature of the sample is modified so as to adjust (change) the viscosity of the fluid (more precisely, of the liquid base).

It has been experimentally observed that, in this way, it is possible to adjust the parameters of the vortices that are formed inside each segment 16 and hence the size/weight of the particles 2 that are trapped in the segment 16.

In particular, the system 1 comprises a heating/cooling device (of a per se known type and not illustrated) to modify the temperature of the sample (in particular, when the sample is arranged along the channel 7).

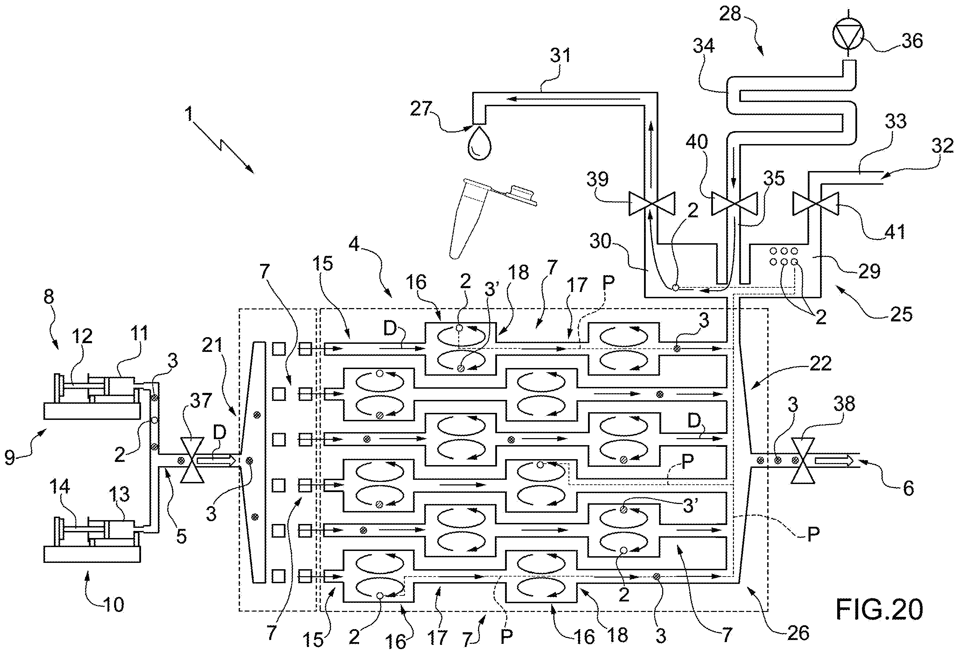

With particular reference to Fig. 20, according to some non-limiting embodiments, the sample comprises at least one particle 3'.

The particles 3' are different from the particles 2 (e.g. in size and/or weight). More in particular, the particles 3' are morphologically different from the particles 2.

In particular, the particles 3' are different from the particles 3 (e.g. in size and/or weight) . More in particular, the particles 3' are morphologically different from the particles 3.

In these cases, during the trapping step, the (at least part of the) particle/s 3' is/are trapped in the second segment 16. During the selection step, the movement device 26 directly exerts said force on the particle/s 2, so as to move the particle/s 2 substantially selectively relative to the particle/s 3' along at least the part of the given path P from the segment 16 (i.e. from inside the segment 16) downstream of the second segment 16 itself.

Advantageously but not necessarily, the movement device 26 directly exerts the force on the particle/s 2 so as to move the particle/s 2 substantially selectively, relative to (at least part of) a further content of the microfluidic channel 7, along at least one part of a given path P (out of) from the segment 16 (in an area) downstream of the segment 16 itself.

In particular, the further content of the microfluidic channel 7 comprises the fluid in which the particles 3 (and the particles 2) and the particle/s 3 (and possibly the particles 3') are distributed (suspended).

More precisely but not necessarily, the movement device 26 moves the particle/s 2 substantially selectively (in particular, relative to at least part of the further content of the microfluidic channel 7; more in particular, relative to the particle/s 3) along at least one part of the given path P (out of) from the segment 16, in particular (in an area) downstream of the segment 16.

During the selection step, the movement device 26 moves the particle/s 2 substantially selectively (in particular, relative to the particles 3) from the channel 7 (in particular, from the segment 16) to the collection area 25 (in particular, through the segment 17).

Alternatively or additionally, during the selection step, the movement device 26 moves the particle/s 2 substantially selectively (in particular, relative to the particles 3) (out of) from the segment 16 (in the channel 7, in particular to the segment 17). In these cases, the method, advantageously but not necessarily, comprises a collection step, which is at least partially subsequent to the selection step and during which a (washing) liquid is conveyed (in particular, from the feeding assembly 8) through the microfluidic channel 7 so as to take the particle/s 2 out of the microfluidic circuit 4 (in particular, through the outlet 6).

In particular, during the collection step, the speed of the liquid is adjusted (more precisely, is kept sufficiently low) so that the particle/s 2 is/are not trapped once again (or remain still trapped) in the channel 7 (in particular, in the segment 16).

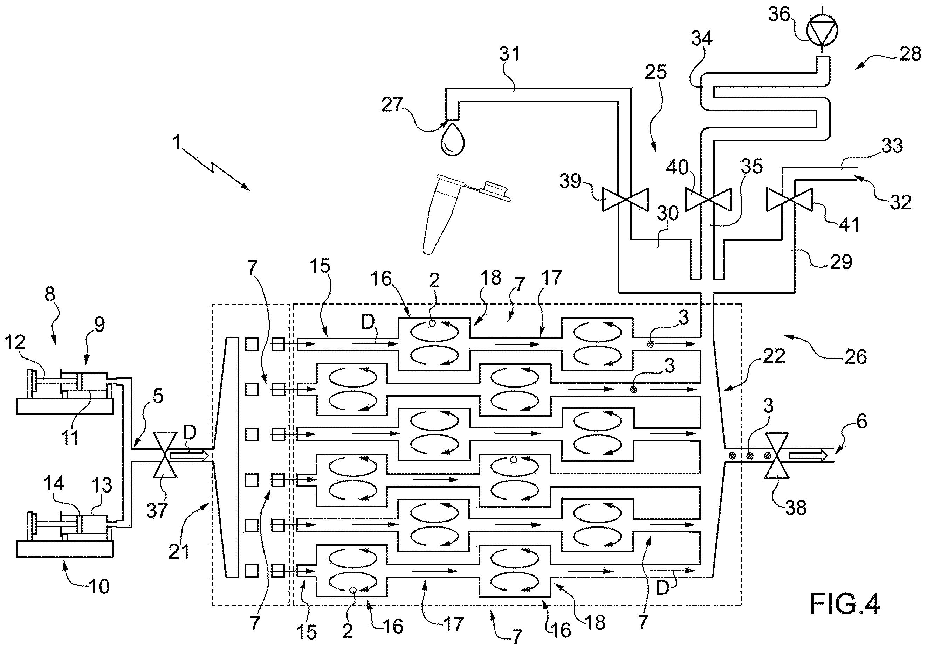

According to some non-limiting embodiments, the method comprises a washing step (Fig. 4), during which the feeding assembly 8 conveys a washing liquid through the microfluidic channel 7 so that the particle 3 is taken out of the given path P, in particular through the outlet 6, while the particle 2 is kept in the segment 16 (trapped by the vortex).

In the case in which a collection step (as described above) is provided, the washing step is (at least partially) prior to the collection step.

In particular, the selection step is (at least partially) subsequent to the washing step.

According to some non-limiting embodiments, the washing step is (at least partially) subsequent to the trapping step.

In particular, the washing step is (at least partially) simultaneous to the trapping step.

In particular, the washing step is simultaneous and/or subsequent to the feeding step.

Advantageously but not necessarily, the washing step is (at least partially) simultaneous to the feeding step.

According to some non-limiting embodiments, the particle/s 2 is/are trapped by means of a trapping system chosen in the group consisting of: a vortex created in the segment 16, a dielectrophoretic force exerted on the segment 16 (in particular, in these cases, a combination of dielectrophoretic force, of sedimentation and of hydrodynamic lift is exerted on the particle 2), a magnetic force exerted on the segment 16 (for example, in these cases, the particle 2 comprises a cell bound with specific antibodies to a magnetic bead) (and a combination thereof).

Advantageously but not necessarily, during the trapping step, the particle/s 2 is/are trapped by a vortex (or a plurality of vortices created in the segments 16) created in the expansion segment 16 (or by a plurality of vortices created in the segments 16). In particular, in these cases, during the trapping step at least one particle 3 passes through the segment 16 and reaches at least the segment 17.

In these cases, the (each) segment 15 has an inner cross-section; the (each) segment 16 has an inner cross-section with a sudden increase AI (in particular of at least approximately 80 um, Figs. 9 and 14), relative to the inner cross-section of the segment 15. In particular, the (each) segment 17 has a smaller inner cross-section than the inner cross-section of the segment 16. More in particular, the size increase AI ranges from approximately 80 um to approximately 800 um (more precisely, up to 400; even more precisely, up to 100 um). It should be noted that in Figs. 9 and 10 there is an increase AI on both sides of the channel 7. Even more in particular, the segments 15, 16 and 17 have the sizes indicated above with reference to system 1.

According to some non-limiting embodiments, the particle/s 2 is/are trapped by means of a dielectrophoretic force exerted on the segment 16 (in particular, in these cases, a combination of dielectrophoretic force, of sedimentation and of hydrodynamic lift is exerted on the particle 2).

In practice, when a dielectrophoretic force is used the selection between particle 2 and particle 3 is carried out based on a combination of size/weight and dielectric properties of the particles 2 and 3 themselves.

According to some non-limiting embodiments, the particle/s 2 is/are trapped by means of a magnetic force exerted on the segment 16 (for example, in these cases, the particle 2 comprises a cell bound with specific antibodies to a magnetic bead).

In particular, when the magnetic force is exerted, the particle 2 comprises a magnetic element (more precisely, is magnetic). Additionally or alternatively, when the dielectrophoretic force is exerted, the first particle comprises a dielectric element.

Advantageously but not necessarily, during the selection step, the fluid (liquid) (in particular, the fluid in which the particles 2 and 3 is inserted) present in the channel 7 (more precisely, present in the microfluidic circuit 4) is not moved (in particular this fluid is substantially stationary). In this manner, the selection step is carried out in a more precise and efficient manner. In particular (to keep the fluid substantially stationary inside the microfluidic circuit 4), during the selection step, the flow regulators 37 and 38 (and, preferably, 39, 40 and 41) are kept closed.

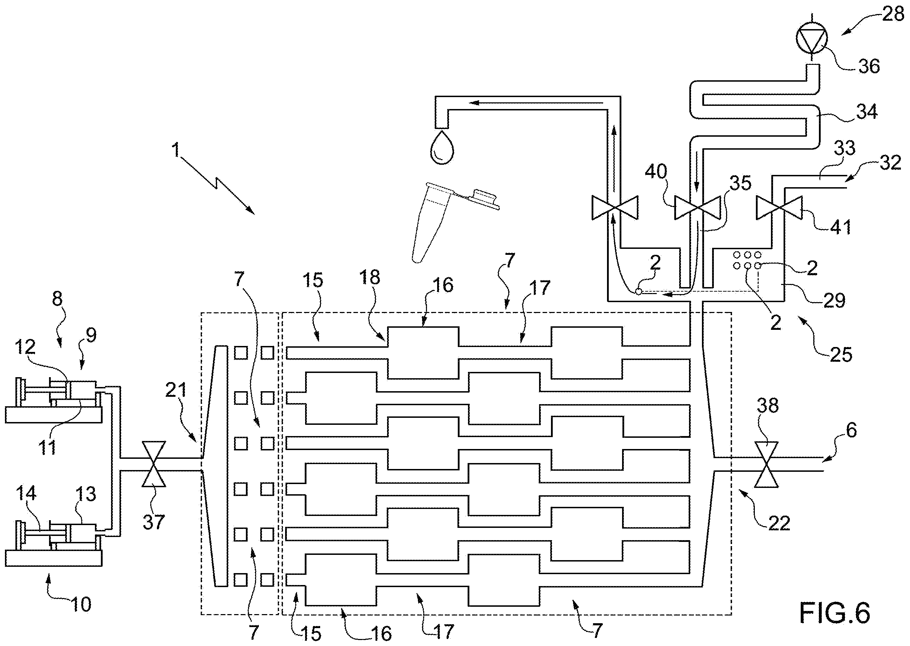

According to some non-limiting embodiments, the method comprises a recovery step (Fig. 6), during which the particle/s 2 is/are conveyed from the collection area 25 through an outlet 27 (out of the microfluidic circuit 4). In particular, during the recovery step, the fluid (liquid) (in particular, in which the particle/s 2 is/are arranged) present in the collection area 25 is moved so as to take the particle/s 2 through the outlet 27.

Advantageously but not necessarily, during the selection step, a plurality of particles 2 is moved in the collection area 25 so as to obtain a group of particles 2 arranged in the collection area 25; in particular, during the recovery step, the particles 2 are moved away from the collection area 25 (more in particular, are conveyed from the collection area 25 out of the microfluidic circuit 4) one at a time. In other words, during the recovery step, a particle 2 is moved away from the collection area 25 (more in particular, is conveyed from the collection area 25 out of the microfluidic circuit 4) individually (relative to the other particles 2).

Advantageously but not necessarily, the selection step comprises a detection sub-step, which is at least partially subsequent to the trapping step and during which information concerning the content of the second segment 16 is collected in order to identify at least the particle/s 2; for example, during the selection step, the particle/s 2 is/are distinguished from the particle/s 3 (and/or from the particle/s 3').

According to some non-limiting embodiments, during the selection step the particle/s 2 is/are identified (and distinguished from the particle/s 3) by capturing at least one imagine (in particular, by the detection device). More precisely, the particle/s 2 is/are identified (and distinguished from the particle/s 3 and/or from the particles 3' and/or from the particle/s 2') by assessing one or more of the visible (for example morphological and/or fluorescence) features thereof. Even more precisely, at least one visible (morphological and/or fluorescence) feature of the particle/s 2 (and of the particle/s 3 and/or of the particles 3' and/or of the particle/s 2') is captured and compared with at least one visible (morphological and/or fluorescence) feature of reference (for example a reference image). For example, if one or more features correspond, the particle/s is/are identified as particle/s 2; on the contrary, if one or more features do not correspond, the particle/s is/are identified as particle 3 (and/or particle 3' and/or particle 2').

Advantageously but not necessarily, the method comprises a marking step, which is (at least partially) prior to the selection step and during which one between the particle 2 and the second particle 3 is marked with a selective marker. In particular, during the marking step, the particle/s 2 is/are marked with the selective marker/s. According to some non-limiting embodiments, the marking step is (at least partially) subsequent to the trapping step.

It should be noted that selective marker/s is meant as marker/s capable of binding substantially to the particle 2 and substantially not to the particle 3 (or vice versa). More precisely, the selective marker/s is/are substantially unable to bind to any other particles present in the sample.

In particular, during the marking step, a liquid containing the selective marker/s is made to flow along the (at least part of the) microfluidic circuit 4 (in particular, along the channel/s 7; more in particular, from the inlet 5 to the outlet 6).

In particular, the particles 2 and 3 are defined as indicated above.

Advantageously but not necessarily, during the selection step, the particle/s 2 is/are moved by means of a system chosen in the group consisting of: travelling waves, thermal flow, local fluid movements generated by electro thermal flow, local fluid movements generated by electro- hydrodynamic forces, dielectrophoresis, optical tweezers, opto-electronic tweezers, light-induced dielectrophoresis, magnetophoresis, acoustophoresis (and a combination thereof).

More in particular, during the selection step, the particle/s 2 is/are moved by means of a system chosen in the group consisting of: dielectrophoresis, optical tweezers, magnetophoresis, acoustophoresis (and a combination thereof).

According to some non-limiting embodiments, the sample has a plurality of particles 2 and of particles 3 and the microfluidic system 1 has a plurality of second segments. In these cases, during the trapping step, at least one part of the particles 2 is trapped by vortices created in the segments 16 and at least one part of the particles 3 passes through the segments 16 (and reaches at least the segment 17); during the selection step, the movement device 26 moves the at least part of the particles 2 from the segments 16 (in particular, to the collection area 25). In particular, during the washing step, the at least part of the particles 3 is taken through the outlet 6 while the at least part of the particles 2 is kept in the segment 16 (trapped by the vortices).

Advantageously but not necessarily, the method is implemented by the system 1 described above.

The subject matter of the present invention surprisingly allows one or more given particles 2 to be isolated (relative to one or more other particles 3) in a precise and rapid manner even starting from a sample of relatively large size.

In this regard, it should be noted that it has been experimentally observed that the subject matter of the present invention makes it possible to obtain a surprisingly high separation efficiency (keeping high precision results).

In this context it has been supposed that the trapping step and the selection step play a significant role by cooperating in synergy.

## Claims

1. A method for the isolation of at least one first particle (2) of a given type by means of a microfluidic system (1), which comprises a feeding assembly (8) and a microfluidic circuit (4) having: at least one inlet (5); at least one first outlet (6); and at least one microfluidic channel (7), which is designed to fluidically connect the inlet (5) and the first outlet (6);
the microfluidic channel (7) comprises at least one first segment (15), at least one second segment (16), which is arranged downstream of the first segment (15), and at least one third segment (17), which is arranged downstream of the second segment (16);
the method comprises a feeding step, during which the feeding assembly (8) feeds a sample, comprising at least one first particle (2) and at least one second particle (3) of a type different from the first particle (2), from the inlet (5) to the first outlet (6) along the microfluidic channel (7); and
a trapping step, during which the first particle (2) is trapped in and prevented from escaping from the second segment (16), while letting the second particle (3), which reaches at least the third segment (17), pass through the second segment (16); the microfluidic system (1) comprises a movement device (26), which is configured to directly exert a selective force upon said first particle (2) of a given type;
the method further comprises a selection step, which is subsequent to the trapping step and during which the movement device (26) directly exerts a force upon the first particle (2) so as to substantially selectively move the first particle (2), relative to at least part of a further content of the microfluidic channel (7), along at least one part of a given path (P) from the second segment (16) downstream of the second segment (16) itself; the given path (P) extends inside said microfluidic circuit (4);
wherein the microfluidic system (1) comprises a collection area (25), which is fluidically connected to the microfluidic channel (7); during the selection step, the movement device (26) moves the first particle (2) substantially selectively from the microfluidic channel (7), from the second segment (16), to the collection area (25).

2. The method according to claim 1, wherein, during the selection step, the movement device (26) directly exerts said force upon the first particle (2) so as to substantially selectively move the first particle (2) relative to the second particle (3) along at least said part of said given path (P) from the second segment (16) downstream of the second segment (16) itself.

3. The method according to claim 1 or 2, wherein the sample comprises at least one third particle (3'); during the trapping step, the third particle (3') is trapped in the second segment (16); during the selection step, the movement device (26) directly exerts said force upon the first particle (2) so as to move the first particle (2) substantially selectively relative to the third particle (3') along at least said part of said given path (P) from the second segment (16) downstream of the second segment (16) itself.

4. The method according to any one of the preceding claims, wherein the selection step comprises a detection sub-step, which is at least partially subsequent to the trapping step and during which information concerning the content of the second segment (16) is collected in order to identify at least said first particle (2); for example, during the selection step, said first particle (2) is distinguished from said third particle (3').

5. The method according to any one of the preceding claims, wherein during the trapping step, the first particle (2) is trapped by means of a trapping system chosen in the group consisting of: a vortex created in the second segment (16), a dielectrophoretic force exerted at the second segment (16), a magnetic force exerted at the second segment (16), and a combination thereof.

6. The method according to any one of the preceding claims, wherein the first segment (15) has a first inner cross-section; the second segment (16) has a second inner cross-section having a sudden size increase (AI) relative to the first inner cross-section (16); the first particle (2) is trapped by means of a vortex created in the second segment (16).

7. The method according to any one of the preceding claims, and comprising a recovery step, during which the first particle (2) is conveyed from the collection area (25) out of the microfluidic circuit (4), for example through a second outlet (27); for example, during the recovery step, the fluid present in the collection area (25) is moved so as to force the first particle (2) through the second outlet (27); for example, the first particle (2) is larger than the second particle (3).

8. The method according to any one of the preceding claims, wherein, during the selection step a plurality of first particles (2) are moved to the collection area (25) so as to obtain a group of first particles (2) in the collection area (25); for example, during the recovery step, the first particles (2) are moved away from the collection area (25) (for example, they are conveyed from the collection area (25) out of the microfluidic circuit (4)) one at a time.

9. The method according to any one of the preceding claims and comprising a washing step, during which the feeding assembly (8) conveys a washing liquid through the microfluidic channel (7) so that the second particle (3) is forced out of the of given path (P), for example through the first outlet (6), whereas the first particle (2) is kept in the second segment (16); for example, the selection step is subsequent to the washing step; for example, the washing step is at least partially subsequent to the trapping step; for example, during the selection step, the fluid present in the channel (7) is not moved (the fluid is substantially still).

10. The method according to any one of the preceding claims, wherein the sample has a plurality of first particles (2) and a plurality of second particles (3); the microfluidic system (1) has a plurality of second segments (16); during the trapping step, at least part of the first particles (2) is trapped by vortexes created in the second segments (16) and at least part of the second particles (3) passes through the second segments (16); during the selection step, the movement device (26) moves at least part of the first particles (2) from the second segments (16), for example to the collection area (25); for example, during the washing step, at least part of the second particles (3) is forced out of the microfluidic circuit (4) (for example, through the first outlet (6)), whereas at least part of the first particles (2) is kept in the second segment (16).

11. The method according to any one of the preceding claims and comprising a detection sub-step, which is at least partially subsequent to the trapping step and at least partially prior to the selection step and during which the first particle (2) is identified by capturing at least one image; for example, the first particle (2) is identified by assessing one or more morphological and/or fluorescence features thereof.

12. The method according to any one of the preceding claims, wherein, during the selection step, the first particle (2) is moved by means of a system chosen in the group consisting of: dielectrophoresis, optical tweezers, opto-electronic tweezers, light-induced dielectrophoresis, magnetophoresis, acoustophoresis, and a combination thereof.

13. The method according to any one of the preceding claims, wherein the first particle (2) is a circulating tumour cell; the second particle (3) is chosen in the group consisting of: erythrocytes, lymphocytes, and a combination thereof.

14. The method according to any one of the preceding claims and comprising a marking step, which is at least partially prior to the selection step (for example, is at least partially prior to the detection sub-step) and during which one between the first particle (2) and the second particle (3) is marked with a selective marker.

15. The method according to any one of the preceding claims, wherein the sample comprises (in particular, mainly consists of) a substantially liquid base in which the first particle (2) and at least the second particle (3) are distributed; the method comprises an adjustment step, during which the temperature of the sample is changed so as to change the viscosity of said liquid base.

16. A microfluidic system for the isolation of at least one first particle (2) of a given type; the microfluidic system (1) comprises a microfluidic circuit (4) provided with: at least one inlet (5); at least one first outlet (6); at least one microfluidic channel (7), which is configured to fluidically connect the inlet (5) and the first outlet (6); and a feeding assembly, which is configured to feed a sample along the microfluidic channel (7);
the sample comprises the first particle (2) and at least one second particle (3) of a different type from the first particle (2) ;
the microfluidic channel (7) comprises at least one first segment (15), at least one second segment (16), which is arranged downstream of the first segment (15), and at least one third segment (17), which is arranged downstream of the second segment (16);
the microfluidic system (1) further comprises a trapping system, which is configured to trap the first particle (2) in the microfluidic channel (7), while letting the second particle (3), which reaches at least the third segment (17), go through; and a movement device (26), which is configured to directly exert a selective force upon said first particle (2) so as to move the first particle (2) along at least one part of a given path (P) from the second segment (16) downstream of the second segment (16); the given path (P) extends inside said microfluidic circuit (4);
wherein the microfluidic system (1) comprises a collection area (25), which is fluidically connected to the microfluidic channel (7); the movement device (26) is designed to move the first particle (2) substantially selectively from the microfluidic channel (7) to the collection area (25).

17. The microfluidic system according to claim 16, wherein the trapping system is chosen in the group consisting of: the second segment (16) shaped so as to generate, as a consequence of a fluid flow flowing through the microfluidic channel (7), a vortex arranged at the second segment (16) and is configured to trap the first particle (2); a device configured to exert a dielectrophoretic force at the second segment (16); a device configured to exert a magnetic force at the second segment (16); and a combination thereof.

18. The microfluidic system according to claim 16 or 17, wherein the first segment (15) has a first inner cross-section; the second segment (16) has a second inner cross-section with an equivalent diameter with a sudden increase (AI) of at least 80 um relative to the first inner cross-section, and at least one third segment (17), which is arranged downstream of the second segment (16); the microfluidic channel (7) (for example, the second segment (16)) is configured to generate, as a consequence of a fluid flow flowing through the microfluidic channel (7), a vortex, which is arranged at the second segment (16) and is designed to trap the first particle (2).

19. The microfluidic system according to claim 18, wherein the second inner cross-section has a sudden size increase (AI) of the equivalent diameter ranging from approximately 80 um to approximately 800 um relative to the first inner cross-section; for example, the first and the third segment (15, 17) have a width ranging from 20 um to 200 um and a height ranging from 20 um to 500 um; for example, the second segment has a length ranging from 200 um to 2 mm.

20. The microfluidic system according to any one of the claims from 16 to 19, wherein the movement device (26) comprises a particle moving system chosen in the group consisting of: dielectrophoresis, optical tweezers, opto-electronic tweezers, light-induced dielectrophoresis, magnetophoresis, acoustophoresis, and a combination thereof.

21. The microfluidic system according to any one of the claims from 16 to 20, wherein the movement device (26) is configured to directly exert the selective force upon said first particle (2) of a given type in order to move the first particle (2) along the given path (P) from the second segment (16) to the collection area (25), which is arranged downstream of the microfluidic channel (7).

22. The microfluidic system according to claim 21, wherein the collection area (25) comprises a waiting area (29) and a recovery area (30); the movement device (16) being configured to transfer the first particle (2) from the microfluidic channel (7) (for example, from the second segment (16)) to the waiting area (29) and, subsequently, from the waiting area (29) to the recovery area (30); the microfluidic system (1) further comprising a conveying assembly (28), which is configured to feed a fluid towards the recovery area (30) so as to convey the first particle (2) out of the microfluidic circuit (4) through a second outlet (27) of the microfluidic circuit (4).

23. The microfluidic system according to any one of the claims from 16 to 22 and comprising at least one detection device to capture images of at least part of the microfluidic circuit (4), for example at least of the second segment (16), the given path (P) and the collection area (25).

24. The microfluidic system according to any one of the claims from 16 to 23, wherein the microfluidic circuit (4) comprises a second outlet (27); the microfluidic system (1) comprises a conveying assembly (28), which is configured to convey the first particle (2) from the collection area (25), through the second outlet (27), out of the microfluidic circuit (4).

25. The microfluidic system according to any one of the claims from 16 to 24, wherein the first, the second and the third segment (15, 16, 17) have respective cross-sections substantially having the shape of quadrilateral parallelogram.

26. The microfluidic system according to any one of the claims from 16 to 25, wherein the second segment (16) is delimited by a rear surface (19) arranged at the end of the first segment (16) and transverse to the microfluidic channel (7) as well as having an inclination of at least 45°, for example, it is substantially perpendicular, relative to a feeding direction (D) of the first particle (2) along the first segment (15).

27. The microfluidic system according to one of the claims from 16 to 26, wherein the microfluidic circuit (4) comprises a plurality of microfluidic channels (7), each having at least one respective first segment (15), at least one respective second segment (16) and at least one respective third segment (17).

28. The microfluidic system according to any one of the claims from 16 to 27, wherein the feeding assembly (8) comprises a washing device (10), which is configured to feed a washing liquid through the microfluidic channel (7) towards the first outlet (6).

## Patentansprüche

1. Verfahren für die Isolierung mindestens eines ersten Teilchens (2) eines gegebenen Typs mit Hilfe eines Mikrofluidsystems (1), das umfasst: eine Einspeiseanordnung (8) und einen Mikrofluidkreislauf (4) mit: mindestens einem Einlass (5); mindestens einem ersten Auslass (6); und mindestens einem Mikrofluidkanal (7), der ausgelegt ist, den Einlass (5) und den ersten Auslass (6) fluidtechnisch zu verbinden; wobei der Mikrofluidkanal (7) mindestens ein erstes Segment (15), mindestens ein zweites Segment (16), das stromabwärts des ersten Segments (15) angeordnet ist, und mindestens ein drittes Segment (17), das stromabwärts des zweiten Segments (16) angeordnet ist, umfasst;
wobei das Verfahren einen Einspeiseschritt umfasst, während dessen die Einspeiseanordnung (8) eine Probe, die mindestens ein erstes Teilchen (2) und mindestens ein zweites Teilchen (3) eines Typs, der von dem ersten Teilchen (2) verschieden ist, umfasst, von dem Einlass (5) zu dem ersten Auslass (6) entlang des Mikrofluidkanals (7) einspeist; und
einen Fangschritt, während dessen das erste Teilchen (2) gefangen wird und daran gehindert wird, aus dem zweiten Segment (16) auszutreten, während das zweite Teilchen (3), das zumindest das dritte Segment (17) erreicht, durch das zweite Segment (16) durchgelassen wird; wobei das Mikrofluidsystem (1) eine Bewegungsvorrichtung (26) umfasst, die konfiguriert ist, auf das erste Teilchen (2) eines gegebenen Typs unmittelbar eine selektive Kraft auszuüben;
wobei das Verfahren ferner einen Auswahlschritt umfasst, der auf den Fangschritt folgt und während dessen die Bewegungsvorrichtung (26) unmittelbar eine Kraft auf das erste Teilchen (2) ausübt, um im Wesentlichen das erste Teilchen (2) selektiv in Bezug auf zumindest einen Teil eines weiteren Inhalts des Mikrofluidkanals (7) entlang zumindest eines Teils eines gegebenen Wegs (P) von dem zweiten Segment (16) stromabwärts des zweiten Segments (16) selbst zu bewegen; wobei sich der gegebene Weg (P) innerhalb des Mikrofluidkreislaufs (4) erstreckt;
wobei das Mikrofluidsystem (1) einen Sammelbereich (25) umfasst, der mit dem Mikrofluidkanal (7) fluidtechnisch verbunden ist, wobei während des Auswahlschritts die Bewegungsvorrichtung (26) das erste Teilchen (2) im Wesentlichen selektiv von dem Mikrofluidkanal (7) von dem zweiten Segment (16) zu dem Sammelbereich (25) bewegt.

2. Verfahren nach Anspruch 1, wobei während des Auswahlschritts die Bewegungsvorrichtung (26) die Kraft unmittelbar auf das erste Teilchen (2) ausübt, um im Wesentlichen das erste Teilchen (2) selektiv in Bezug auf das zweite Teilchen (3) entlang zumindest des Teils des gegebenen Wegs (P) von dem zweiten Segment (16) stromabwärts des zweiten Segments (16) selbst zu bewegen.

3. Verfahren nach Anspruch 1 oder 2, wobei die Probe mindestens ein drittes Teilchen (3') umfasst; wobei während des Fangschritts das dritte Teilchen (3') in dem zweiten Segment (16) gefangen wird; wobei während des Auswahlschritts die Bewegungsvorrichtung (26) die Kraft unmittelbar auf das erste Teilchen (2) ausübt, um das erste Teilchen (2) im Wesentlichen selektiv in Bezug auf das dritte Teilchen (3') entlang zumindest des Teils des gegebenen Wegs (P) von dem zweiten Segment (16) stromabwärts des zweiten Segments (16) selbst zu bewegen.

4. Verfahren nach einem der vorhergehenden Ansprüche, wobei der Auswahlschritt einen Detektionsunterschritt umfasst, der zumindest teilweise auf den Fangschritt folgt und während dessen Informationen, die den Inhalt des zweiten Segments (16) betreffen, gesammelt werden, um zumindest das erste Teilchen (2) zu identifizieren; wobei zum Beispiel während des Auswahlschritts das erste Teilchen (2) von dem dritten Teilchen (3') unterschieden wird.

5. Verfahren nach einem der vorhergehenden Ansprüche, wobei während des Fangschritts das erste Teilchen (2) mit Hilfe eines Fangsystems gefangen wird, das in der Gruppe ausgewählt ist, die besteht aus: einem Wirbel, der in dem zweiten Segment (16) erzeugt wird, einer dielektrophoretischen Kraft, die an dem zweiten Segment (16) ausgeübt wird, einer magnetischen Kraft, die an dem zweiten Segment (16) ausgeübt wird, und einer Kombination davon.

6. Verfahren nach einem der vorhergehenden Ansprüche, wobei das erste Segment (15) einen ersten inneren Querschnitt besitzt; das zweite Segment (16) einen zweiten inneren Querschnitt mit einer plötzlichen Größenzunahme (AI) in Bezug auf den ersten inneren Querschnitt (16) besitzt; wobei das erste Teilchen (2) mit Hilfe eines Wirbels, der in dem zweiten Segment erzeugt wird, gefangen wird.

7. Verfahren nach einem der vorhergehenden Ansprüche und das einen Wiedergewinnungsschritt umfasst, während dessen das erste Teilchen (2) von dem Sammelbereich (25) aus dem Mikrofluidkreislauf (4), zum Beispiel durch einen zweiten Auslass (27), befördert wird; wobei zum Beispiel während des Wiedergewinnungsschritts das Fluid, das in dem Sammelbereich (25) vorhanden ist, bewegt wird, um das erste Teilchen (2) durch den zweiten Auslass (27) zu drängen; wobei das erste Teilchen (2) zum Beispiel größer als das zweite Teilchen (3) ist.

8. Verfahren nach einem der vorhergehenden Ansprüche, wobei während des Auswahlschritts mehrere erste Teilchen (2) in den Sammelbereich (25) bewegt werden, um eine Gruppe erster Teilchen (2) in dem Sammelbereich (25) zu erhalten; wobei zum Beispiel während des Wiedergewinnungsschritts die ersten Teilchen (2) eines nach dem anderen von dem Sammelbereich (25) wegbewegt werden (sie werden zum Beispiel von dem Sammelbereich (25) aus dem Mikrofluidkreislauf (4) befördert).

9. Verfahren nach einem der vorhergehenden Ansprüche und das einen Waschschritt umfasst, während dessen die Einspeiseanordnung (8) eine Waschflüssigkeit durch den Mikrofluidkanal (7) befördert, so dass das zweite Teilchen (3) aus dem gegebenen Weg (P), zum Beispiel durch den ersten Auslass (6), herausgedrängt wird, während das erste Teilchen (2) in dem zweiten Segment (16) behalten wird; wobei zum Beispiel der Auswahlschritt auf den Waschschritt folgt; wobei der Waschschritt zum Beispiel teilweise auf den Fangschritt folgt; wobei zum Beispiel während des Auswahlschritts das Fluid, das in dem Kanal (7) vorhanden ist, nicht bewegt wird (das Fluid ist im Wesentlichen ruhig).

10. Verfahren nach einem der vorhergehenden Ansprüche, wobei die Probe mehrere erste Teilchen (2) und mehrere zweite Teilchen (3) besitzt; wobei das Mikrofluidsystem (1) mehrere zweite Segmente (16) besitzt; wobei während des Fangschritts zumindest ein Teil der ersten Teilchen (2) durch Wirbel, die in den zweiten Segmenten (16) erzeugt werden, gefangen wird und mindestens ein Teil der zweiten Teilchen (3) durch die zweiten Segmente (16) hindurchführt; wobei während des Auswahlschritts die Bewegungsvorrichtung (26) zumindest einen Teil der ersten Teilchen (2) von den zweiten Segmenten (16) zum Beispiel zu dem Sammelbereich (25) bewegt; wobei zum Beispiel während des Waschschritts zumindest ein Teil der zweiten Teilchen (3) aus dem Mikrofluidkreislauf (4) (zum Beispiel durch den ersten Auslass (6)) herausgedrängt wird, während zumindest ein Teil der ersten Teilchen (2) in dem zweiten Segment (16) behalten wird.

11. Verfahren nach einem der vorhergehenden Ansprüche und das einen Detektionsunterschritt umfasst, der zumindest teilweise auf den Fangschritt folgt und zumindest teilweise vor dem Auswahlschritt ist und während dessen das erste Teilchen (2) durch Aufnehmen mindestens eines Bildes identifiziert wird; wobei zum Beispiel das erste Teilchen (2) durch Beurteilen eines oder mehrerer morphologischer und/oder fluoreszierender Merkmale von ihm identifiziert wird.

12. Verfahren nach einem der vorhergehenden Ansprüche, wobei während des Auswahlschritts das erste Teilchen (2) mit Hilfe eines System bewegt wird, das in der Gruppe ausgewählt ist, die besteht aus: Dielektrophorese, optische Pinzetten, optoelektronische Pinzetten, lichtinduzierte Dielektrophorese, Magnetophorese, Akustophorese und einer Kombination davon.

13. Verfahren nach einem der vorhergehenden Ansprüche, wobei das erste Teilchen (2) eine zirkulierende Tumorzelle ist; das zweite Teilchen (3) in der Gruppe ausgewählt ist, die besteht aus: Erythrozyten, Lymphozyten und einer Kombination davon.

14. Verfahren nach einem der vorhergehenden Ansprüche und das einen Markierungsschritt umfasst, der zumindest teilweise vor dem Auswahlschritt ist (der zum Beispiel zumindest teilweise vor dem Detektionsunterschritt ist) und während dessen eines des ersten Teilchens (2) und des zweiten Teilchens (3) mit einer selektiven Markierung markiert wird.

15. Verfahren nach einem der vorhergehenden Ansprüche, wobei die Probe eine im Wesentlichen flüssige Basis umfasst (insbesondere hauptsächlich aus ihr besteht), in der das erste Teilchen (2) und zumindest das zweite Teilchen (3) verteilt sind; wobei das Verfahren einen Anpassungsschritt umfasst, während dessen die Temperatur der Probe geändert wird, um die Viskosität der flüssigen Basis zu ändern.

16. Mikrofluidsystem für die Isolierung mindestens eines ersten Teilchens (2) eines gegebenen Typs; wobei das Mikrofluidsystem (1) einen Mikrofluidkreislauf (4) umfasst, der ausgestattet ist mit: mindestens einem Einlass (5); mindestens einem ersten Auslass (6); und mindestens einem Mikrofluidkanal (7), der konfiguriert ist, den Einlass (5) und den ersten Auslass (6) fluidtechnisch zu verbinden; und einer Einspeiseanordnung, die konfiguriert ist, eine Probe entlang des Mikrofluidkanals (7) einzuspeisen;
wobei die Probe das erste Teilchen (2) und mindestens ein zweites Teilchen (3) eines von dem ersten Teilchen (2) verschiedenen Typs umfasst;
wobei der Mikrofluidkanal (7) mindestens ein erstes Segment (15), mindestens ein zweites Segment (15), das stromabwärts des ersten Segments (15) angeordnet ist, und mindestens ein drittes Segment (17), das stromabwärts des zweiten Segments (16) angeordnet ist, umfasst;
wobei das Mikrofluidsystem (1) ferner ein Fangsystem umfasst, das konfiguriert ist, das erste Teilchen (2) in dem Mikrofluidkanal (7) zu fangen, während das zweite Teilchen (3), das zumindest das dritte Segment (17) erreicht, durchgelassen wird; und eine Bewegungsvorrichtung (26), die konfiguriert ist, auf das erste Teilchen (2) unmittelbar eine selektive Kraft auszuüben, um das erste Teilchen (2) entlang zumindest eines Teils eines gegebenen Wegs (P) von dem zweiten Segment (16) stromabwärts des zweiten Segments (16) zu bewegen;
wobei sich der gegebene Weg (P) innerhalb des Mikrofluidkreislaufs (4) erstreckt;
wobei das Mikrofluidsystem (1) einen Sammelbereich (25) umfasst, der mit dem Mikrofluidkanal (7) fluidtechnisch verbunden ist; wobei die Bewegungsvorrichtung (26) ausgelegt ist, das erste Teilchen (2) im Wesentlichen selektiv von dem Mikrofluidkanal (7) zu dem Sammelbereich (25) zu bewegen.

17. Mikrofluidsystem nach Anspruch 16, wobei das Fangsystem in der Gruppe ausgewählt ist, die besteht aus: dem zweiten Segment (16), das so geformt ist, dass es als eine Folge eines Fluidflusses, der durch den Mikrofluidkanal (7) fließt, einen Wirbel erzeugt, der an dem zweiten Segment (16) angeordnet ist und konfiguriert ist, das erste Teilchen (2) zu fangen; einer Vorrichtung, die konfiguriert ist, eine dielektrophoretische Kraft an dem zweiten Segment (16) auszuüben; einer Vorrichtung, die konfiguriert ist, eine magnetische Kraft an dem zweiten Segment (16) auszuüben; und einer Kombination davon.

18. Mikrofluidsystem nach Anspruch 16 oder 17, wobei das erste Segment (15) einen ersten inneren Querschnitt besitzt; das zweite Segment (16) einen zweiten inneren Querschnitt mit einem äquivalenten Durchmesser mit einer plötzlichen Zunahme (AI) von mindestens 80 µm in Bezug auf den ersten inneren Querschnitt (16) besitzt und mindestens ein drittes Segment (17), das stromabwärts des zweiten Segments (16) angeordnet ist; wobei der Mikrofluidkanal (7) (zum Beispiel das zweite Segment (16)) konfiguriert ist, als eine Folge eine Fluidflusses, der durch den Mikrofluidkanal (7) fließt, einen Wirbel zu erzeugen, der an dem zweiten Segment angeordnet ist und ausgelegt ist, das erste Teilchen (2) zu fangen.

19. Mikrofluidsystem nach Anspruch 18, wobei der zweite innere Querschnitt eine plötzliche Größenzunahme (AI) des äquivalenten Durchmessers besitzt, der in einem Bereich von ungefähr 80 µm bis ungefähr 800 µm in Bezug auf den ersten inneren Querschnitt liegt; zum Beispiel haben das erste und das dritte Segment (15, 17) eine Breite, die in einem Bereich von 20 µm bis 200 µm liegt, und eine Höhe, die in einem Bereich von 20 µm bis 500 µm liegt; zum Beispiel besitzt das zweite Segment eine Länge, die in einem Bereich von 200 µm bis 2 mm liegt.

20. Mikrofluidsystem nach einem der Ansprüche 16 bis 19, wobei die Bewegungsvorrichtung (26) ein Teilchenbewegungssystem besitzt, das in der Gruppe ausgewählt ist, die besteht aus: Dielektrophorese, optische Pinzetten, optoelektronische Pinzetten, lichtinduzierte Dielektrophorese, Magnetophorese, Akustophorese und einer Kombination davon.

21. Mikrofluidsystem nach einem der Ansprüche 16 bis 20, wobei die Bewegungsvorrichtung (26) konfiguriert ist, die selektive Kraft unmittelbar auf das erste Teilchen (2) eines gegebenen Typs auszuüben, um das erste Teilchen (2) entlang des gegebenen Wegs (P) von dem zweiten Segment (16) zu dem Sammelbereich (25), der stromabwärts des Mikrofluidkanals (7) angeordnet ist, zu bewegen.

22. Mikrofluidsystem nach Anspruch 21, wobei der Sammelbereich (25) einen Wartebereich (29) und einen Wiedergewinnungsbereich (30) umfasst; wobei die Bewegungsvorrichtung (16) konfiguriert ist, das erste Teilchen (2) von dem Mikrofluidkanal (7) (zum Beispiel von dem zweiten Segment (16)) zu dem Wartebereich (29) zu übertragen und anschließend von dem Wartebereich (29) zu dem Wiedergewinnungsbereich (30); wobei das Mikrofluidsystem (1) ferner eine Förderanordnung (28) umfasst, die konfiguriert ist, ein Fluid in Richtung des Wiedergewinnungsbereichs (30) einzuspeisen, um das erste Teilchen (2) aus dem Mikrofluidkreislauf (4) durch einen zweiten Auslass (27) des Mikrofluidkreislaufs (4) zu befördern.

23. Mikrofluidsystem nach einem der Ansprüche 16 bis 22 und das mindestens eine Detektionsvorrichtung umfasst, um Bilder zumindest eines Teils des Mikrofluidkreislaufs (4), zum Beispiel zumindest des zweiten Segments (16), des gegebenen Wegs (P) und des Sammelbereichs (25), aufzunehmen.

24. Mikrofluidsystem nach einem der Ansprüche 16 bis 23, wobei der Mikrofluidkreislauf (4) einen zweiten Auslass (27) umfasst; wobei das Mikrofluidsystem (1) eine Förderanordnung (28) umfasst, die konfiguriert ist, das erste Teilchen (2) von dem Sammelbereich (25) durch den zweiten Auslass (27) aus dem Mikrofluidkreislauf (4) zu befördern.

25. Mikrofluidsystem nach einem der Ansprüche 16 bis 24, wobei das erste, das zweite und das dritte Segment (15, 16, 17) jeweilige Querschnitte besitzen, die im Wesentlichen die Form eines vierseitigen Parallelogramms besitzen.

26. Mikrofluidsystem nach einem der Ansprüche 16 bis 25, wobei das zweite Segment (16) durch eine hintere Fläche (19) begrenzt ist, die an dem Ende des ersten Segments (16) angeordnet und quer zu dem Mikrofluidkanal (7) ist, als auch eine Neigung von mindestens 45° aufweist, zum Beispiel ist es im Wesentlichen senkrecht in Bezug auf eine Einspeiserichtung (D) des ersten Teilchens (2) entlang des ersten Segments (15).

27. Mikrofluidsystem nach einem der Ansprüche 16 bis 26, wobei der Mikrofluidkreislauf (4) mehrere Mikrofluidkanäle (7) umfasst, die jeweils mindestens ein jeweiliges erstes Segment (15), mindestens ein jeweiliges zweites Segment (16) und mindestens ein jeweiliges drittes Segment (17) besitzen.

28. Mikrofluidsystem nach einem der Ansprüche 16 bis 27, wobei die Einspeiseanordnung (8) eine Waschvorrichtung (10) umfasst, die konfiguriert ist, eine Waschflüssigkeit durch den Mikrofluidkanal (7) in Richtung des ersten Auslasses (6) einzuspeisen.

## Revendications

1. Méthode d'isolement d'au moins une première particule (2) d'un type donné au moyen d'un système microfluidique (1), qui comprend un ensemble d'alimentation (8) et un circuit microfluidique (4) ayant : au moins une entrée (5) ; au moins une première sortie (6) ; et au moins un canal microfluidique (7), qui est conçu pour relier de manière fluidique l'entrée (5) et la première sortie (6) ; le canal microfluidique (7) comprend au moins un premier segment (15), au moins un deuxième segment (16) qui est disposé en aval du premier segment (15) et au moins un troisième segment (17) qui est disposé en aval du deuxième segment (16) ;
la méthode comprend une étape d'alimentation, au cours de laquelle l'ensemble d'alimentation (8) fournit un échantillon, comprenant au moins une première particule (2) et au moins une deuxième particule (3) d'un type différent de la première particule (2), de l'entrée (5) vers la première sortie (6) le long du canal microfluidique (7) ; et
une étape de piégeage, au cours de laquelle la première particule (2) est piégée dans le deuxième segment (16) et empêchée de s'en échapper, tout en laissant passer la deuxième particule (3), qui atteint au moins le troisième segment (17), à travers le deuxième segment (16) ;
le système microfluidique (1) comprend un dispositif de déplacement (26), qui est configuré pour exercer directement une force sélective sur ladite première particule (2) d'un type donné ;
la méthode comprend en outre une étape de sélection, qui est postérieure à l'étape de piégeage et au cours de laquelle le dispositif de déplacement (26) exerce directement une force sur la première particule (2) de manière à déplacer sensiblement sélectivement la première particule (2), par rapport à au moins une partie d'un autre contenu du canal microfluidique (7), le long d'au moins une partie d'un trajet donné (P) à partir du deuxième segment (16) en aval du deuxième segment (16) lui-même ; le trajet donné (P) s'étend à l'intérieur dudit circuit microfluidique (4) ;
dans laquelle le système microfluidique (1) comprend une zone de collecte (25) qui est reliée de manière fluidique au canal microfluidique (7) ; lors de l'étape de sélection, le dispositif de déplacement (26) déplace la première particule (2) de manière sensiblement sélective à partir du canal microfluidique (7), du deuxième segment (16), vers la zone de collecte (25) .

2. Méthode selon la revendication 1, dans laquelle, lors de l'étape de sélection, le dispositif de déplacement (26) exerce directement ladite force sur la première particule (2) de manière à déplacer sensiblement sélectivement la première particule (2) par rapport à la deuxième particule (3) le long d'au moins ladite partie dudit trajet donné (P) à partir du deuxième segment (16) en aval du deuxième segment (16) lui-même.

3. Méthode selon la revendication 1 ou 2, dans laquelle l'échantillon comprend au moins une troisième particule (3') ; lors de l'étape de piégeage, la troisième particule (3') est piégée dans le deuxième segment (16) ; pendant l'étape de sélection, le dispositif de déplacement (26) exerce directement ladite force sur la première particule (2) de manière à déplacer la première particule (2) de manière sensiblement sélective par rapport à la troisième particule (3') le long d'au moins ladite partie dudit trajet donné (P) depuis le deuxième segment (16) en aval du deuxième segment (16) lui-même.

4. Méthode selon l'une quelconque des revendications précédentes, dans laquelle l'étape de sélection comprend une sous-étape de détection, qui est au moins partiellement postérieure à l'étape de piégeage et au cours de laquelle des informations concernant le contenu du deuxième segment (16) sont collectées afin d'identifier au moins ladite première particule (2) ; par exemple, lors de l'étape de sélection, ladite première particule (2) est distinguée de ladite troisième particule (3').

5. Méthode selon l'une quelconque des revendications précédentes, dans laquelle lors de l'étape de piégeage, la première particule (2) est piégée au moyen d'un système de piégeage choisi dans le groupe consistant en : un vortex créé dans le deuxième segment (16), une force diélectrophorétique exercée au niveau du deuxième segment (16), une force magnétique exercée au niveau du deuxième segment (16), et une combinaison de ceux-ci.

6. Méthode selon l'une quelconque des revendications précédentes, dans laquelle le premier segment (15) a une première section transversale interne ; le deuxième segment (16) a une deuxième section transversale interne ayant une augmentation soudaine de taille (AI) par rapport à la première section transversale interne (16) ; la première particule (2) est piégée au moyen d'un vortex créé dans le deuxième segment (16).

7. Méthode selon l'une quelconque des revendications précédentes, et comprenant une étape de récupération, au cours de laquelle la première particule (2) est acheminée de la zone de collecte (25) hors du circuit microfluidique (4), par exemple à travers une deuxième sortie (27) ; par exemple, lors de l'étape de récupération, le fluide présent dans la zone de collecte (25) est déplacé de manière à forcer la première particule (2) à travers la deuxième sortie (27) ; par exemple, la première particule (2) est plus grosse que la deuxième particule (3).

8. Méthode selon l'une quelconque des revendications précédentes, dans laquelle, lors de l'étape de sélection, une pluralité de premières particules (2) sont déplacées vers la zone de collecte (25) de manière à obtenir un groupe de premières particules (2) dans la zone de collecte (25) ; par exemple, lors de l'étape de récupération, les premières particules (2) sont éloignées de la zone de collecte (25) (par exemple, elles sont évacuées individuellement de la zone de collecte (25) hors du circuit microfluidique (4)).

9. Méthode selon l'une quelconque des revendications précédentes et comprenant une étape de lavage, au cours de laquelle l'ensemble d'alimentation (8) achemine un liquide de lavage à travers le canal microfluidique (7) afin que la deuxième particule (3) soit expulsée du trajet donné (P), par exemple à travers la première sortie (6), tandis que la première particule (2) est maintenue dans le deuxième segment (16) ; par exemple, l'étape de sélection est postérieure à l'étape de lavage ; par exemple, l'étape de lavage est au moins partiellement postérieure à l'étape de piégeage ; par exemple, lors de l'étape de sélection, le fluide présent dans le canal (7) n'est pas déplacé (le fluide est sensiblement immobile).

10. Méthode selon l'une quelconque des revendications précédentes, dans laquelle l'échantillon a une pluralité de premières particules (2) et une pluralité de deuxièmes particules (3) ; le système microfluidique (1) a une pluralité de deuxièmes segments (16) ; lors de l'étape de piégeage, au moins certaines des premières particules (2) sont piégées par des vortex créés dans les deuxièmes segments (16) et au moins certaines des deuxièmes particules (3) traversent les deuxièmes segments (16) ; lors de l'étape de sélection, le dispositif de déplacement (26) déplace au moins certains des premières particules (2) depuis les deuxièmes segments (16), par exemple vers la zone de collecte (25) ; par exemple, lors de l'étape de lavage, au moins certaines des deuxièmes particules (3) sont expulsées hors du circuit microfluidique (4) (par exemple, par la première sortie (6)), alors qu'au moins certaines des premières particules (2) sont maintenues dans le deuxième segment (16).

11. Méthode selon l'une quelconque des revendications précédentes et comprenant une sous-étape de détection, qui est au moins partiellement postérieure à l'étape de piégeage et au moins partiellement antérieure à l'étape de sélection et au cours de laquelle la première particule (2) est identifiée en capturant au moins une image ; par exemple, la première particule (2) est identifiée en évaluant une ou plusieurs caractéristiques morphologiques et/ou de fluorescence de celle-ci.

12. Méthode selon l'une quelconque des revendications précédentes, dans laquelle, lors de l'étape de sélection, la première particule (2) est déplacée au moyen d'un système choisi dans le groupe consistant en : la diélectrophorèse, les pinces optiques, les pinces opto-électroniques, la diélectrophorèse photo-induite, la magnétophorèse, l'acoustophorèse et une combinaison de celles-ci.

13. Méthode selon l'une quelconque des revendications précédentes, dans laquelle la première particule (2) est une cellule tumorale circulante ; la deuxième particule (3) est choisie dans le groupe consistant en : des érythrocytes, des lymphocytes et une combinaison de celles-ci.

14. Méthode selon l'une quelconque des revendications précédentes et comprenant une étape de marquage, qui est au moins partiellement antérieure à l'étape de sélection (par exemple, est au moins partiellement antérieure à la sous-étape de détection) et au cours de laquelle l'une parmi la première particule (2) et la deuxième particule (3) est marquée avec un marqueur sélectif.

15. Méthode selon l'une quelconque des revendications précédentes, dans laquelle l'échantillon comprend (notamment consistant principalement en) une base sensiblement liquide dans laquelle sont réparties la première particule (2) et au moins la deuxième particule (3) ; la méthode comprend une étape d'ajustement, au cours de laquelle la température de l'échantillon est modifiée de manière à modifier la viscosité de ladite base liquide.

16. Système microfluidique pour l'isolement d'au moins une première particule (2) d'un type donné ; le système microfluidique (1) comprend un circuit microfluidique (4) doté : d'au moins une entrée (5) ; d'au moins une première sortie (6) ; d'au moins un canal microfluidique (7), qui est configuré pour relier de manière fluidique l'entrée (5) et la première sortie (6) ; et d'un ensemble d'alimentation, qui est configuré pour alimenter un échantillon le long du canal microfluidique (7) ;
l'échantillon comprend la première particule (2) et au moins une deuxième particule (3) d'un type différent de la première particule (2) ;
le canal microfluidique (7) comprend au moins un premier segment (15), au moins un deuxième segment (16) qui est disposé en aval du premier segment (15) et au moins un troisième segment (17) qui est disposé en aval du deuxième segment (16) ;
le système microfluidique (1) comprend en outre un système de piégeage, qui est configuré pour piéger la première particule (2) dans le canal microfluidique (7), tout en laissant passer la deuxième particule (3), qui atteint au moins le troisième segment (17) ; et un dispositif de déplacement (26), qui est configuré pour exercer directement une force sélective sur ladite première particule (2) de manière à déplacer la première particule (2) le long d'au moins une partie d'un trajet donné (P) à partir du deuxième segment (16) en aval du deuxième segment (16) ; le trajet donné (P) s'étend à l'intérieur dudit circuit microfluidique (4) ;
dans lequel le système microfluidique (1) comprend une zone de collecte (25) qui est reliée de manière fluidique au canal microfluidique (7) ; le dispositif de déplacement (26) est conçu pour déplacer la première particule (2) de manière sensiblement sélective du canal microfluidique (7) vers la zone de collecte (25).

17. Système microfluidique selon la revendication 16, dans lequel le système de piégeage est choisi dans le groupe consistant en : le deuxième segment (16) façonné de manière à générer, suite à un écoulement de fluide circulant à travers le canal microfluidique (7), un vortex disposé au niveau du deuxième segment (16) et configuré pour piéger la première particule (2) ; un dispositif configuré pour exercer une force diélectrophorétique au niveau du deuxième segment (16) ; un dispositif configuré pour exercer une force magnétique au niveau du deuxième segment (16) ; et une combinaison de ceux-ci.

18. Système microfluidique selon la revendication 16 ou 17, dans lequel le premier segment (15) a une première section transversale interne ; le deuxième segment (16) a une deuxième section transversale interne d'un diamètre équivalent avec une augmentation soudaine (AI) d'au moins 80 µm par rapport à la première section transversale interne, et au moins un troisième segment (17) qui est disposé en aval du deuxième segment (16) ; le canal microfluidique (7) (par exemple, le deuxième segment (16)) est configuré pour générer, suite à un écoulement de fluide circulant à travers le canal microfluidique (7), un vortex, qui est disposé au niveau du deuxième segment (16) et est conçu pour piéger la première particule (2).

19. Système microfluidique selon la revendication 18, dans lequel la deuxième section transversale interne a une augmentation de taille soudaine (AI) du diamètre équivalent allant d'environ 80 µm à environ 800 µm par rapport à la première section transversale interne ; par exemple, les premier et troisième segments (15, 17) ont une largeur allant de 20 µm à 200 µm et une hauteur allant de 20 µm à 500 µm ; par exemple, le deuxième segment a une longueur allant de 200 µm à 2 mm.

20. Système microfluidique selon l'une quelconque des revendications 16 à 19, dans lequel le dispositif de déplacement (26) comprend un système de déplacement de particules choisi dans le groupe consistant en : la diélectrophorèse, les pinces optiques, les pinces optoélectroniques, la diélectrophorèse photo-induite, la magnétophorèse, l'acoustophorèse et une combinaison de celles-ci.

21. Système microfluidique selon l'une quelconque des revendications 16 à 20, dans lequel le dispositif de déplacement (26) est configuré pour exercer directement la force sélective sur ladite première particule (2) d'un type donné afin de déplacer la première particule (2) le long du trajet donné (P) du deuxième segment (16) vers la zone de collecte (25), qui est disposée en aval du canal microfluidique (7).

22. Système microfluidique selon la revendication 21, dans lequel la zone de collecte (25) comprend une zone d'attente (29) et une zone de récupération (30) ; le dispositif de déplacement (16) étant configuré pour transférer la première particule (2) du canal microfluidique (7) (par exemple, du deuxième segment (16)) vers la zone d'attente (29) et, par la suite, de la zone d'attente (29) vers la zone de récupération (30) ; le système microfluidique (1) comprenant en outre un ensemble d'acheminement (28), qui est configuré pour fournir un fluide à la zone de récupération (30) de manière à acheminer la première particule (2) hors du circuit microfluidique (4) à travers une deuxième sortie (27) du circuit microfluidique (4).

23. Système microfluidique selon l'une quelconque des revendications 16 à 22 et comprenant au moins un dispositif de détection pour capturer des images d'au moins une partie du circuit microfluidique (4), par exemple au moins du deuxième segment (16), du trajet donné (P) et de la zone de collecte (25).

24. Système microfluidique selon l'une quelconque des revendications 16 à 23, dans lequel le circuit microfluidique (4) comprend une deuxième sortie (27) ; le système microfluidique (1) comprend un ensemble d'acheminement (28), qui est configuré pour acheminer la première particule (2) de la zone de collecte (25), à travers la deuxième sortie (27), hors du circuit microfluidique (4).

25. Système microfluidique selon l'une quelconque des revendications 16 à 24, dans lequel les premier, deuxième et troisième segments (15, 16, 17) ont des sections transversales respectives ayant sensiblement la forme d'un parallélogramme quadrilatère.

26. Système microfluidique selon l'une quelconque des revendications 16 à 25, dans lequel le deuxième segment (16) est délimité par une surface arrière (19) disposée à l'extrémité du premier segment (16) et transversale au canal microfluidique (7) ainsi qu'ayant une inclinaison d'au moins 45°, par exemple, elle est sensiblement perpendiculaire par rapport à une direction d'alimentation (D) de la première particule (2) le long du premier segment (15).

27. Système microfluidique selon l'une des revendications 16 à 26, dans lequel le circuit microfluidique (4) comprend une pluralité de canaux microfluidiques (7), ayant chacun au moins un premier segment (15) respectif, au moins un deuxième segment (16) respectif et au moins un troisième segment (17) respectif.

28. Système microfluidique selon l'une quelconque des revendications 16 à 27, dans lequel l'ensemble d'alimentation (8) comprend un dispositif de lavage (10), qui est configuré pour fournir un liquide de lavage à travers le canal microfluidique (7) vers la première sortie (6).
